# EUROPÄISCHE PATENTSCHRIFT

(11) **EP 2 344 301 B1**
(45) Veröffentlichungstag und Bekanntmachung des Hinweises auf die Patenterteilung: **18.07.2012**
(21) Anmeldenummer: 09782874.3
(22) Anmeldetag: 10.09.2009
(51) Int. Cl.: B23Q 39/02, B23Q 39/04

(54) **WERKZEUGMASCHINE**
MACHINE TOOL
MACHINE-OUTIL

(30) Priorität: 22.09.2008 DE 102008050656
(43) Veröffentlichungstag der Anmeldung: 20.07.2011
(73) Patentinhaber: Traub Drehmaschinen GmbH & Co. KG, 73262 Reichenbach an der Fils (DE)
(72) Erfinder: BAUMANN, Ulrich, 73252 Lenningen (DE)
(74) Vertreter: Hoeger, Stellrecht & Partner Patentanwälte
(86) Internationale Anmeldenummer: PCT/EP2009/061756
(87) Internationale Veröffentlichungsnummer: WO 2010/031732

(56) Entgegenhaltungen:
- EP-A- 1 321 212
- EP-A- 1 388 384
- DE-A1- 10 130 760
- DE-A1- 19 621 406

## Beschreibung

Die Erfindung betrifft eine Werkzeugmaschine umfassend ein Maschinengestell, eine am Maschinengestell angeordnete erste Spindel zur Aufnahme eines Werkstücks, einen am Maschinengestell angeordneten ersten Träger für erste Bearbeitungseinheiten, welcher relativ zum Maschinengestell in Richtung einer ersten X-Achse quer zu einer ersten Spindelachse bewegbar ist, wobei die erste Spindel und der erste Träger in Richtung einer zur ersten Spindelachse parallelen Z-Achse relativ zueinander bewegbar sind, einen am Maschinengestell angeordneten zweiten Träger für zweite Bearbeitungseinheiten, welcher relativ zum Maschinengestell zumindest in Richtung einer zweiten X-Achse quer zur ersten Spindelachse bewegbar ist und mit welchem außerdem wechselnde zweite Bearbeitungseinheiten in einer quer zur zweiten X-Achse und quer zur Z-Achse verlaufenden Querrichtung in eine dem Werkstück in der Hauptspindel zugeordnete Funktionsstellung hinein oder aus dieser heraus bewegbar sind, sowie einen am Maschinengestell angeordneten weiteren Träger für weitere Bearbeitungseinheiten.

Bei den bekannten Lösungen ist beispielsweise dem in der ersten Spindel gehaltenen Werkstück auf gegenüberliegenden Seiten jeweils ein Werkzeugrevolver zugeordnet, so dass mit jedem dieser Werkzeugrevolver auf einander gegenüberliegenden Seiten des Werkstücks eine Bearbeitung durchführbar ist.

Ferner ist ein zusätzlicher Träger für eine weitere Bearbeitung vorgesehen.

Eine derartige Werkzeugmaschine ist aus der DE 196 21 406 A1 bekannt.

Der Erfindung liegt die Aufgabe zugrunde, eine Werkzeugmaschine der gattungsgemäßen Art derart zu verbessern, dass diese bei kompaktem und kostengünstigem Aufbau optimale Möglichkeiten zur Bearbeitung von Werkstücken auf einer Werkstückvorderseite und einer Werkstückrückseite bietet.

Diese Aufgabe wird bei einer Werkzeugmaschine der eingangs beschriebenen Art erfindungsgemäß dadurch gelöst, dass der zweite Träger eine zweite Spindel als eine der zweiten Bearbeitungseinheiten trägt, dass durch Bewegen des zweiten Trägers die zweite Spindel in Richtung der Z-Achse und der Querrichtung zwischen einer mit der ersten Spindel fluchtenden Werkstückübernahmestellung und mindestens einer Werkstückbearbeitungsstellung bewegbar ist und dass die weiteren Bearbeitungseinheiten in einem Raumbereich angeordnet sind, in welchem mit der in der mindestens einen Werkstückbearbeitungsstellung stehenden zweiten Spindel eine Bearbeitung einer Werkstückrückseite des in dieser gehaltenen Werkstücks durchführbar ist.

Der Vorteil der erfindungsgemäßen Lösung ist darin zu sehen, dass durch die Anordnung der zweiten Spindel an dem zweiten Träger die Möglichkeit geschaffen ist, diese durch die Bewegungen des zweiten Trägers, die ohnehin für die Bearbeitung des in der ersten Spindel gehaltenen Werkstücks vorgesehen sind, ebenfalls zu bewegen und somit diese bereits vorhandenen Bewegungsachsen auch zur Werkstückbearbeitung, insbesondere Werkstückrückseitenbearbeitung, einzusetzen, so dass trotz eines kompakten und kostengünstigen Aufbaus im Wesentlichen sämtliche Möglichkeiten für die Bearbeitung eines Werkstücks auf der Werkstückvorderseite bei in der ersten Spindel aufgenommenem Werkstück und auf der Werkstückrückseite bei in der zweiten Spindel aufgenommenem Werkstück gegeben sind.

Bearbeitungseinheiten im Sinne der Erfindung umfassen die zweite Spindel und Werkzeugeinheiten und/oder eventuell auch Abstützeinheiten. Eine Funktionsstellung des zweiten Trägers ist jede Stellung desselben, in welcher eine Übernahme oder eine Bearbeitung oder eine Abstützung des in der ersten Spindel gehaltenen Werkstücks erfolgt.

Hinsichtlich der Anordnung des Raumbereichs für die weiteren Bearbeitungseinheiten wurden bislang keine näheren Angaben gemacht.

So sieht eine besonders günstige Lösung vor, dass der Raumbereich für die weiteren Bearbeitungseinheiten auf einer dem ersten Träger gegenüberliegenden Seite einer geometrischen Ebene liegt, die durch die erste Spindelachse hindurch und quer zur zweiten X-Achse verläuft.

Vorzugsweise ist der Raumbereich im Abstand von der geometrischen Ebene angeordnet.

Ferner ist es für die Zugänglichkeit zu dem Raumbereich mit den weiteren Bearbeitungseinheiten günstig, wenn der Raumbereich auf einer Seite einer durch die erste Spindelachse hindurch sowie parallel zur zweiten X-Achse verlaufenden ersten Bearbeitungsebene angeordnet ist.

Vorzugsweise liegt dabei der Raumbereich auf einer einer Frontseite der Werkzeugmaschine zugewandten Seite der ersten Bearbeitungsebene.

Hinsichtlich der Anordnung des Raumbereichs ist es ferner günstig, wenn der Raumbereich auf einer von der ersten Spindelachse nicht zugewandten Seite des zweiten Trägers angeordnet ist.

Beispielsweise ist es dabei denkbar, den Raumbereich auf einer der ersten Spindelachse abgewandten Seite des zweiten Trägers anzuordnen.

Hinsichtlich der Anordnung der weiteren Bearbeitungseinheiten wurden bislang keine näheren Angaben gemacht.

So können die weiteren Bearbeitungseinheiten ohne ein definiertes Muster oder in einem definierten Muster angeordnet sein.

Eine vorteilhafte Lösung sieht vor, dass die weiteren Bearbeitungseinheiten längs mindestens einer Linie angeordnet sind.

Eine derartige Linie könnte beispielsweise eine Gerade sein.

Dabei kann die Gerade entweder parallel zu der durch die erste Spindelachse und quer zur zweiten X-Achse verlaufenden geometrischen Ebene oder quer zu dieser geometrischen Ebene, insbesondere parallel zur X-Achse verlaufen.

Eine andere vorteilhafte Lösung sieht vor, dass die mindestens eine Linie gekrümmt ist.

Insbesondere ist vorzugsweise vorgesehen, dass die mindestens eine Linie bogenförmig um einen Mittelpunkt gekrümmt ist.

Diese Lösung ist insbesondere dann vorteilhaft, wenn der zweite Träger einen um eine Revolverachse drehbaren Revolverkopf aufweist, so dass durch Drehung des Revolverkopfes um die Revolverachse dann, wenn die Revolverachse mit dem Mittelpunkt der bogenförmig gekrümmten Linie zusammenfällt, ein Wechsel von einer Bearbeitungseinheit zur anderen möglich ist.

Um Kollisionen zu vermeiden, ist dabei der Mittelpunkt der bogenförmig gekrümmten Linie im Abstand von der ersten Bearbeitungsebene angeordnet, so dass beispielsweise die Bearbeitungseinheiten dadurch so geordnet werden können, dass sie von der ersten Bearbeitungsebene einen größeren Abstand aufweisen als von dem Mittelpunkt.

Eine derartige gekrümmte, insbesondere bogenförmig gekrümmte Linie ist vorteilhafterweise so angeordnet, dass diese Linie sich in Richtung der zweiten X-Achse über eine größere Distanz erstreckt als in Richtung der Querrichtung, die beispielsweise parallel zur zweiten Y-Achse verläuft.

Ferner ist es für die erfindungsgemäße Lösung vorteilhaft, wenn die weiteren Bearbeitungseinheiten außerhalb eines Bewegungsraumbereichs von an dem zweiten Träger angeordneten als zweite Werkzeugeinheiten ausgebildeten Bearbeitungseinheiten bei in Funktionsstellung stehendem zweiten Träger angeordnet ist.

Dabei ist der Bewegungsraumbereich als der an den zweiten Träger angrenzende und von den Werkzeugeinheiten beanspruchte Raumbereich zu definieren, in dem sich beim Einsatz der zweiten Werkzeugeinheiten des zweiten Trägers an dem in der ersten Spindel aufgenommenen Werkstück die zweiten Werkzeugeinheiten bewegen.

Die Kollisionsgefahr zwischen den zweiten Werkzeugeinheiten des zweiten Trägers und Werkzeugeinheiten des weiteren Trägers lässt sich insbesondere alternativ oder ergänzend zu den vorstehend genannten Möglichkeiten dadurch verhindern, dass das in der zweiten Spindel aufgenommene und über diese überstehende Werkstück außerhalb eines dem zweiten Träger zugeordneten Werkzeugraums angeordnet ist.

Dabei ist der Werkzeugraum der Raum über dem zweiten Träger, in welchem sich die Werkzeugeinheiten des zweiten Trägers mit ihren Werkzeugen erstrecken.

Dabei lässt sich das über die zweite Spindel überstehende Werkstück in verschiedenen Richtungen außerhalb des Werkzeugraums positionieren.

Eine Lösung sieht vor, dass das Werkstück mit seiner Bearbeitungsseite in Richtung quer zur Z-Achse außerhalb des Werkzeugraums angeordnet ist.

Eine andere vorteilhafte Lösung sieht vor, dass das Werkstück mit seiner Bearbeitungsseite in Richtung der Z-Achse außerhalb des Werkzeugraums angeordnet ist.

Beispielsweise ist es bei dieser Lösung denkbar, die zweite Spindel so relativ zu einem als Revolverkopf ausgebildeten zweiten Träger so anzuordnen, dass eine Stirnseite der zweiten Spindel in Richtung der zweiten Spindelachse in einem radialen Abstand von Aufnahmen für die Werkzeugeinheiten oder in einem axialen Abstand von einer Mittelebene von Aufnahmen für die Werkzeugeinheiten angeordnet ist, welcher größer ist als eine maximale Erstreckung von Werkzeugen der zweiten Werkzeugeinheiten in Richtung parallel zur zweiten Spindelachse.

Ist der zweite Träger mit einer Lineareinheit versehen, ist beispielsweise die zweite Spindel mit der zweiten Spindelachse so angeordnet, dass eine zu bearbeitende Werkstückseite eines in dieser aufgenommenen Werkstücks außerhalb eines Werkzeugraums liegt, in welchem sich die Werkzeuge der Werkzeugeinheiten erstrecken.

Hinsichtlich der Anordnung der zweiten Spindel relativ zum zweiten Träger wurden bislang keine näheren Angaben gemacht.

So sieht eine vorteilhafte Lösung vor, dass die zweite Spindel relativ zu den zweiten Werkzeugeinheiten so angeordnet ist, dass bei Bearbeitung des in der zweiten Spindel aufgenommenen Werkstücks die zweiten Werkzeugeinheiten kollisionsfrei zu den weiteren Werkzeugeinheiten bewegbar sind.

Diese Lösung hat den großen Vorteil, dass damit bei der Steuerung der Werkzeugmaschine zur Bearbeitung des in der zweiten Spindel aufgenommenen Werkstücks nicht auf die Position der zweiten Werkzeugeinheiten in Relation zu den weiteren Werkzeugeinheiten Rücksicht genommen werden muss.

Für den Fall, dass eine Simultanbearbeitung des in der Hauptspindel angeordneten Werkstücks mit einer Werkzeugeinheit des zweiten Trägers und des in der zweiten Spindel am zweiten Träger gehaltenen Werkstücks mit Werkzeugeinheiten des weiteren Trägers durchführbar sein soll, ist vorzugsweise vorgesehen, dass der Raumbereich für die weiteren Bearbeitungseinheiten einen weiteren Raumbereich umfasst, in welchem nur Bearbeitungseinheiten für die Simultanbearbeitung vorgesehen sind, wobei vorzugsweise dieser Raumbereich gegenüber der Hauptspindelachse in einem Abstand angeordnet ist.

Insbesondere ist es dabei günstig, wenn der die weiteren Bearbeitungseinheiten zur Simultanbearbeitung aufnehmende Raumbereich so angeordnet ist, dass bei einer Bearbeitung des in der zweiten Spindel aufgenommenen Werkstücks mit diesen weiteren, beispielsweise dritten Bearbeitungseinheiten an dem zweiten Träger angeordnete zweite Bearbeitungseinheiten am in der ersten Spindel gehaltenen Werkstück einsetzbar sind.

Eine weitere vorteilhafte Lösung sieht vor, dass der Raumbereich für die weiteren Bearbeitungseinheiten einen Raumbereich umfasst, in welchem nur Bearbeitungseinheiten für die Rückseitenbearbeitung vorgesehen sind.

Dieser Raumbereich schafft die Möglichkeit, ausschließlich auf die Bearbeitung der Werkstückrückseite bezogene Achsbewegungen des zweiten Trägers durchzuführen, die damit völlig unabhängig von der Bearbeitung der Werkstückvorderseite sind.

Darüber hinaus ist es vorteilhaft, wenn der die weiteren Bearbeitungseinheiten zur reinen Rückseitenbearbeitung aufnehmende Raumbereich so angeordnet ist, dass bei einer Bearbeitung des in der zweiten Spindel aufgenommenen Werkstücks mit den weiteren Bearbeitungseinheiten in diesem Raumbereich die weiteren Werkzeugeinheiten des zweiten Trägers kollisionsfrei zum Werkstück in der ersten Spindel bewegbar sind.

Zur möglichst effizienten Durchführung einer Bearbeitung des Werkstücks mit der zweiten Spindel ist ferner vorzugsweise vorgesehen, dass der an dem zweiten Träger vorgesehenen zweiten Spindel mindestens eine zur Simultanbearbeitung vorgesehene und am zweiten Träger angeordnete zweite Werkzeugeinheit zugeordnet ist.

Eine derartige zweite Werkzeugeinheit ist vorzugsweise relativ zur zweiten Spindel im Abstand angeordnet.

Hinsichtlich der Ausbildung des zweiten Trägers wurden im Zusammenhang mit der bisherigen Erläuterung der einzelnen Ausführungsbeispiele keine definitiven Angaben gemacht.

So ist es denkbar, dass der zweite Träger eine Revolvereinheit umfasst, an deren Revolverkopf die zweite Spindel angeordnet ist.

Dabei könnte die zweite Spindel in gleicher Weise wie eine Werkzeugeinheit am Revolverkopf montierbar sein.

Eine vorteilhafte Lösung sieht jedoch vor, dass die zweite Spindel mittels eines Schwenkarms am Revolverkopf gehalten ist, um eine stabile Anordnung der zweiten Spindel relativ zum Revolverkopf zu erreichen.

Der Schwenkarm könnte unabhängig vom Revolverkopf um die Revolverachse drehbar gelagert sein.

Vorzugsweise ist dabei der Revolverkopf drehfest mit dem Schwenkarm verbunden, so dass der Schwenkarm stets gemeinsam mit dem Revolverkopf um die Revolverachse verschwenkbar ist.

Vorzugsweise ist bei diesem Ausführungsbeispiel zum Vermeiden von Kollisionen zwischen verschiedenen Einheiten die zweite Spindelachse in einem radialen Abstand von der Revolverachse angeordnet, der größer ist als eine maximale radiale Erstreckung von Werkzeugen der zweiten Werkzeugeinheiten.

Der Bewegungsraumbereich ist bei einem Revolverkopf als zweitem Träger für die Aufnahme der Werkzeugeinheiten durch die Werkzeugeinheit bestimmt, welche die größte radiale Erstreckung zur zweiten Revolverachse aufweist und somit durch einen Ringraum um die zweite Revolverachse herum bestimmt, wobei zusätzlich noch eine Bewegung der zweiten Revolverachse zumindest in Richtung der X-Achse den Ringraum ebenfalls in Richtung der X-Achse ausdehnt, und wobei die Bewegung mindestens den Weg umfasst, um welchen der zweite Träger in Richtung der X-Achse bewegbar sein muss, um mit den Bearbeitungseinheiten des zweiten Trägers das Werkstück in der ersten Spindel erreichen zu können.

Bei einer weiteren Ausführungsform, bei welcher der zweite Träger einen Revolverkopf umfasst, an welchem die zweite Spindel angeordnet ist, ist vorgesehen, dass die zweite Spindel so relativ zum Revolverkopf angeordnet ist, dass eine Stirnseite der zweiten Spindel in Richtung der zweiten Spindelachse in einem Abstand von einer Mittelebene von Aufnahmen für die zweiten Bearbeitungseinheiten angeordnet ist, welcher größer ist als eine maximale Erstreckung von Werkzeugen der zweiten Werkzeugeinheiten in Richtung der zweiten Spindelachse.

Alternativ dazu ist bei einer derartigen Werkzeugmaschine vorgesehen, dass die zweite Spindel mit der zweiten Spindelachse so angeordnet ist, dass eine zu bearbeitende Werkstückseite eines in dieser aufgenommenen Werkstücks außerhalb eines um den Revolverkopf herum verlaufenden Werkzeugraums angeordnet ist, in welchem sich die Werkzeugeinheiten und die Werkzeuge erstrecken.

Im Falle eines um die zweite Revolverachse drehbaren Revolverkopfes als zweitem Träger ist die zweite Werkzeugeinheit zur Simultanbearbeitung in einem Winkelabstand von der zweiten Spindel am zweiten Träger angeordnet, wobei der Winkelabstand mehr als 60°, vorzugsweise mehr als 70° beträgt. Ein vorteilhafter Bereich des Winkelabstandes beträgt weniger als 120° vorzugsweise weniger als 110°.

Im Fall eines vom zweiten Träger umfassten Revolverkopfes zur Aufnahme der Gegenspindel und der Werkzeugeinheiten ist vorgesehen, dass der weitere, beispielsweise dritte Raumbereich von der ersten Spindelachse, bezogen auf die Revolverachse, einen Winkelabstand aufweist, welcher ungefähr dem Winkelabstand der zur Simultanbearbeitung vorgesehenen Werkzeugeinheit von der zweiten Spindel im Wesentlichen entspricht.

Im Falle einer Lineareinheit als zweitem Träger ist vorzugsweise vorgesehen, dass die zweite Spindel im Abstand von einer Reihenrichtung angeordnet ist, im Bereich von welcher Schneiden der zweiten Werkzeugeinheiten liegen.

Im Fall einer Lineareinheit ist ferner zweckmäßigerweise vorgesehen, dass der Abstand des Raumbereichs für die weiteren Bearbeitungseinheiten zur Simultanbearbeitung von der ersten Spindelachse ungefähr einem Abstand der zweiten Spindel von der Reihenrichtung, längs welcher Werkzeugschneiden der Werkzeugeinheiten liegen, entspricht.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine perspektivische Ansicht eines ersten Ausführungsbeispiels einer Werkzeugmaschine;
- Fig. 2: eine Draufsicht in Richtung des Pfeils A in Fig. 1;

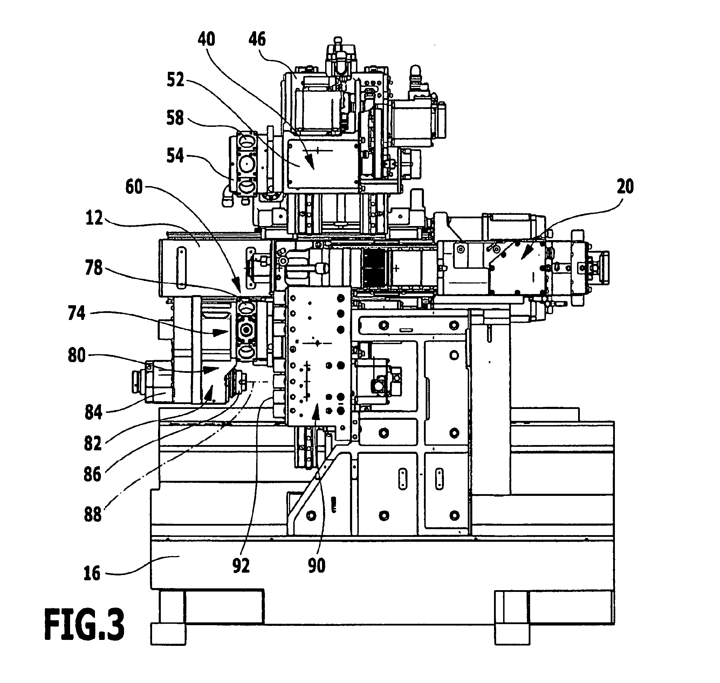

- Fig. 3: eine Draufsicht in Richtung des Pfeils B in Fig. 1;
- Fig. 4: eine ausschnittsweise schematische Darstellung einer ersten Spindel eines ersten Trägers und eines zweiten Trägers mit weiteren Bearbeitungseinheiten;
- Fig. 5: eine Draufsicht in Richtung des Pfeils C in Fig. 4 auf einen ersten Träger ein von der ersten Spindel gehaltenes und der Langdrehführungsbüchse geführtes Werkstück, welches von einem ersten Träger mit einem ersten Werkzeug und einem zweiten Träger mit einem zweiten Werkzeug auf einer Werkstückvorderseite bearbeitet wird, wobei der zweite Träger in einer Vorderseitenbearbeitungsstellung steht;
- Fig. 6: eine Darstellung ähnlich Fig. 5 wobei der zweite Träger in der Vorderseitenbearbeitungsstellung ein anderes zweites Werkzeug zum Einsatz bringt;
- Fig. 7: eine Darstellung ähnlich Fig. 5, wobei der erste Träger und der zweite Träger jeweils ein angetriebenes Werkzeug zur Vorderseitenbearbeitung einsetzen;
- Fig. 8: eine Darstellung ähnlich Fig. 5, wobei der zweite Träger in einer Werkstückübergabestellung steht;
- Fig. 9: eine Darstellung ähnlich Fig. 5, wobei mit dem ersten Träger eine Werkstückvorderseite bearbeitet wird, der zweite Träger in einer Rückseitensimultanbearbeitungsstellung steht und ein in einer zweiten Spindel gehaltenes Werkstück mit einer dritten Bearbeitungseinheit bearbeitet und gleichzeitig mit einer am zweiten Träger gehaltenen zweiten Bearbeitungseinheit das in der ersten Spindel gehaltene Werkstück auf der Werkstückvorderseite bearbeitet;
- Fig. 10: eine Darstellung ähnlich Fig. 9, wobei bei der Simultanrückseitenbearbeitung ein weiteres Werkzeug der dritten Bearbeitungseinheit zum Einsatz kommt und ein weiteres Werkzeug der zweiten Bearbeitungseinheit an der Werkstückvorderseite zum Einsatz kommt;
- Fig. 11: eine Darstellung ähnlich Fig. 9, wobei der zweite Träger ebenfalls in der Simultanrückseitenbearbeitungsstellung steht und bei dem in der zweiten Spindel gehaltenen Werkstück ein weiteres Werkzeug der dritten Bearbeitungseinheit zum Einsatz kommt und bei dem in der ersten Spindel gehaltenen Werkstück ein weiteres Werkzeug der zweiten Bearbeitungseinheit zum Einsatz kommt;

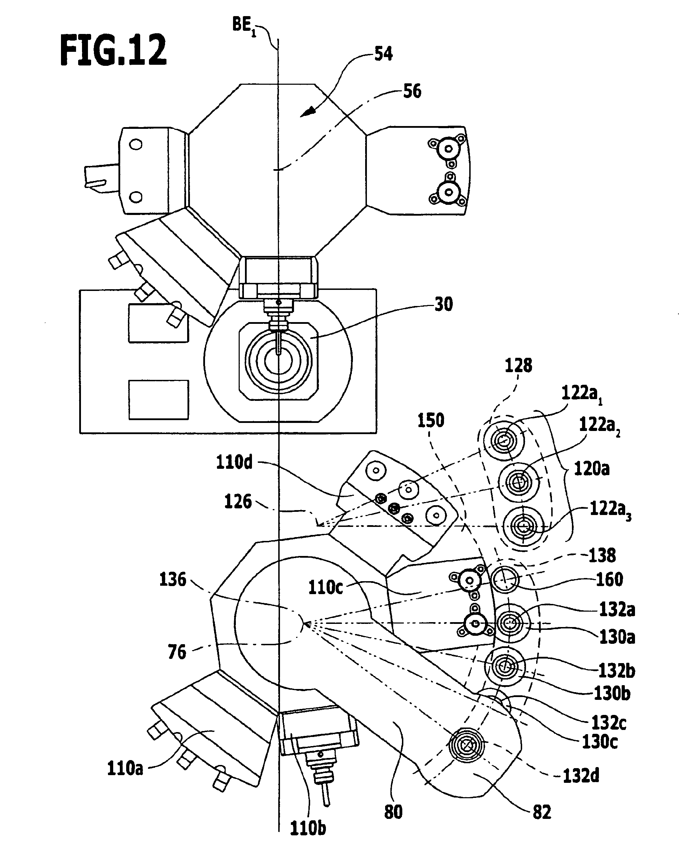

- Fig. 12: eine Darstellung ähnlich Fig. 5, wobei der zweite Träger in einer Rückseitenbearbeitungsstellung steht, in welcher ausschließlich die Werkstückrückseite des in der zweiten Spindel gehaltenen Werkstücks durch weitere dritte Bearbeitungseinheiten bearbeitet wird, allerdings unabhängig von einer Bearbeitung des Werkstücks in der ersten Spindel;

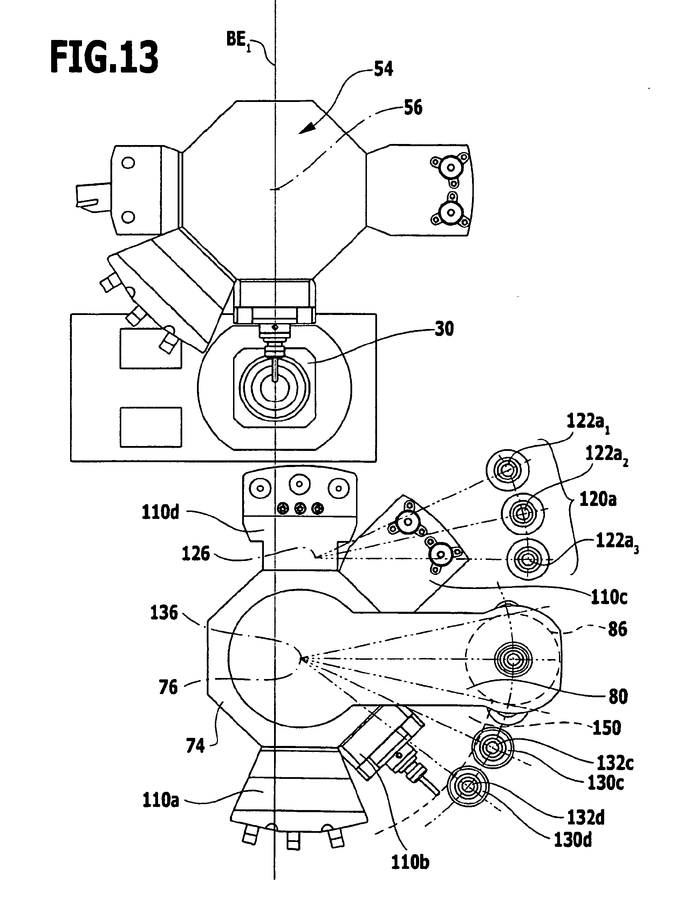

- Fig. 13: eine Darstellung ähnlich Fig. 12 in welchem eine weitere dritte Bearbeitungseinheit zur Bearbeitung der Werkstückrückseite zum Einsatz kommt und der zweite Träger in der Rückseitenbearbeitungsstellung steht;
- Fig. 14: eine Ansicht in Richtung des Pfeils D in Fig. 4;
- Fig. 15: eine Darstellung ähnlich Fig. 5, wobei der zweite Träger in einer Rückseitenbearbeitungsstellung steht, allerdings hierbei das an seiner Werkstückrückseite fertig bearbeitete Werkstück einer Werkstückabfuhreinrichtung übergibt;
- Fig. 16: eine Darstellung ähnlich Fig. 14 eines zweiten Ausführungsbeispiels einer erfindungsgemäßen Werkzeugmaschine;
- Fig. 17: eine Darstellung ähnlich Fig. 12 eines dritten Ausführungsbeispiels einer erfindungsgemäßen Werkzeugmaschine;
- Fig. 18: eine schematische Darstellung ähnlich Fig. 1 eines vierten Ausführungsbeispiels einer erfindungsgemäßen Werkzeugmaschine;
- Fig. 19: eine Darstellung ähnlich Fig. 2 des zweiten Ausführungsbeispiels der erfindungsgemäßen Werkzeugmaschine;
- Fig. 20: eine Darstellung ähnlich Fig. 3 des vierten Ausführungsbeispiels der erfindungsgemäßen Werkzeugmaschine und
- Fig. 21: eine schematische Darstellung ähnlich Fig. 4 des vierten Ausführungsbeispiels der erfindungsgemäßen Werkzeugmaschine.

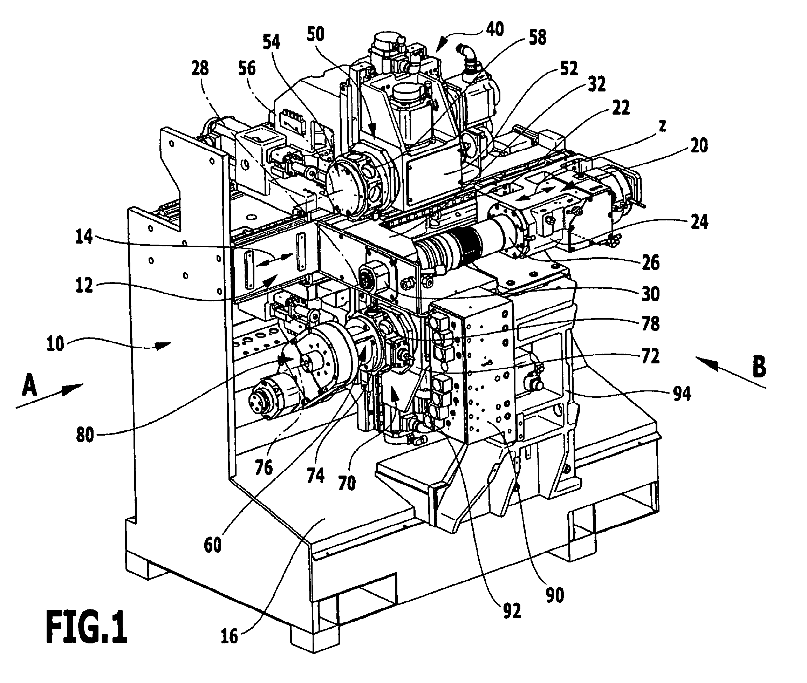

Ein erstes Ausführungsbeispiel einer erfindungsgemäßen Werkzeugmaschine, dargestellt in Fig. 1, umfasst ein Maschinengestell 10, welches einen Maschinenbettkörper 12 aufweist, der sich in einer Längsrichtung 14 erstreckt.

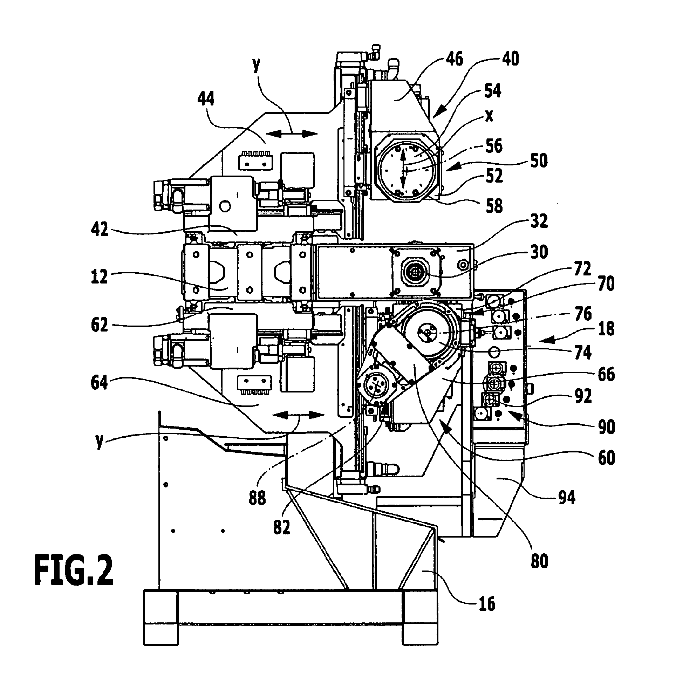

An dem Maschinenbettkörper ist, wie in Fig. 1 und 2 dargestellt, eine Hauptspindeleinheit 20 als erste Spindeleinheit vorgesehen, welche mittels Führungen 22 an dem Maschinenbettkörper 12 verschiebbar geführt ist, und zwar so, dass die Hauptspindeleinheit 20 parallel zur Längsrichtung 14 des Maschinenbettkörpers 12 in Richtung einer Z-Achse bewegbar ist.

Die Hauptspindeleinheit 20 umfasst dabei ihrerseits ein Hauptspindelgehäuse 24, in welchem eine Hauptspindel 26 als erste Spindel um eine Hauptspindelachse 28 als erste Spindelachse drehbar und antreibbar gelagert ist, wobei die Hauptspindelachse 28 parallel zur Z-Achse verläuft, längs welcher die Hauptspindeleinheit 20 bewegbar ist.

Bei den dargestellten Ausführungsbeispielen ist die Werkzeugmaschine als Langdrehmaschine ausgebildet, welche somit eine der Hauptspindeleinheit 20 zugeordnete Langdrehführungsbüchse 30 aufweist, die an einem fest mit dem Maschinenbettkörper 12 verbundenen Arm 32 gehalten ist und dazu dient, ein in der Hauptspindel 26 aufgenommenes Werkstück zur Bearbeitung zu führen, wobei die Langdrehführungsbüchse 30 eine relativ zum Maschinengestell 10 in Richtung der Z-Achse stationäre Führung für das Werkstück darstellt, während die Hauptspindeleinheit 20 und somit auch das Werkstück in Richtung der Z-Achse bewegbar sind.

An dem Maschinenbettkörper 12 ist ein als Ganzes mit 40 bezeichneter erster Träger für Bearbeitungseinheiten angeordnet, welcher einen an dem Maschinenbettkörper 12 in Richtung parallel zu der Z-Achse bewegbaren ersten Z-Schlitten 42, einen an dem ersten Z-Schlitten 42 in Richtung einer Y-Achse bewegbaren ersten Y-Schlitten 44 und einen an dem ersten Y-Schlitten 44 geführten und in Richtung einer ersten X-Achse bewegbaren ersten X-Schlitten 46 umfasst.

Auf dem ersten X-Schlitten 46 sitzt eine als Ganzes mit 50 bezeichnete erste Revolvereinheit für die Bearbeitungseinheiten, welche ein erstes Revolvergehäuse 52 und einen ersten Revolverkopf 54 umfasst, wobei der erste Revolverkopf 54 um eine erste Revolverachse 56 relativ zu dem ersten Revolvergehäuse 52 drehbar ist.

An dem ersten Revolverkopf 54 sind eine Vielzahl von Aufnahmen 58 für Bearbeitungseinheiten vorgesehen.

Beispielsweise ist der erste Revolverkopf 54 um die erste Revolverachse 56 stufenlos gesteuert drehbar um Positionierfehler und/oder Geometriefehler über die Ansteuerung der Drehstellungen ausgleichen zu können.

An dem Maschinenbettkörper 12 ist ferner ein zweiter Träger 60 für Bearbeitungseinheiten vorgesehen, wobei der zweite Träger 60 ebenfalls einen am Maschinenbettkörper 12 in Richtung der Z-Achse bewegbar geführten zweiten Z-Schlitten 62, einen an dem zweiten Z-Schlitten 62 in Richtung einer Y-Achse verschiebbar geführten zweiten Y-Schlitten und einen an dem zweiten Y-Schlitten in Richtung einer X-Achse bewegbar geführten zweiten X-Schlitten 66 aufweist.

Auf dem zweiten X-Schlitten 66 ist eine als Ganzes mit 70 bezeichnete zweite Revolvereinheit angeordnet, welche ein zweites Revolvergehäuse 72 aufweist, an welchem ein zweiter Revolverkopf 74 angeordnet ist, der relativ zum zweiten Revolvergehäuse 72 um eine zweite Revolverachse 76 drehbar ist.

Der zweite Revolverkopf 74 weist ebenfalls Aufnahmen 78 für Bearbeitungseinheiten auf, trägt aber andererseits noch einen Schwenkarm 80, an welchem als eine Bearbeitungseinheit eine Gegenspindeleinheit 82 als zweite Spindeleinheit angeordnet ist, die ihrerseits ein Gegenspindelgehäuse 84 sowie eine drehbar in dem Gegenspindelgehäuse 84 gelagerte Gegenspindel 86 als zweite Spindeleinheit aufweist, wobei die Gegenspindel 86 um eine Gegenspindelachse 88 als zweite Spindelachse relativ zum Gegenspindelgehäuse 84 drehbar ist und die Gegenspindelachse 88 vorzugsweise parallel zur zweiten Revolverachse 76 ausgerichtet ist.

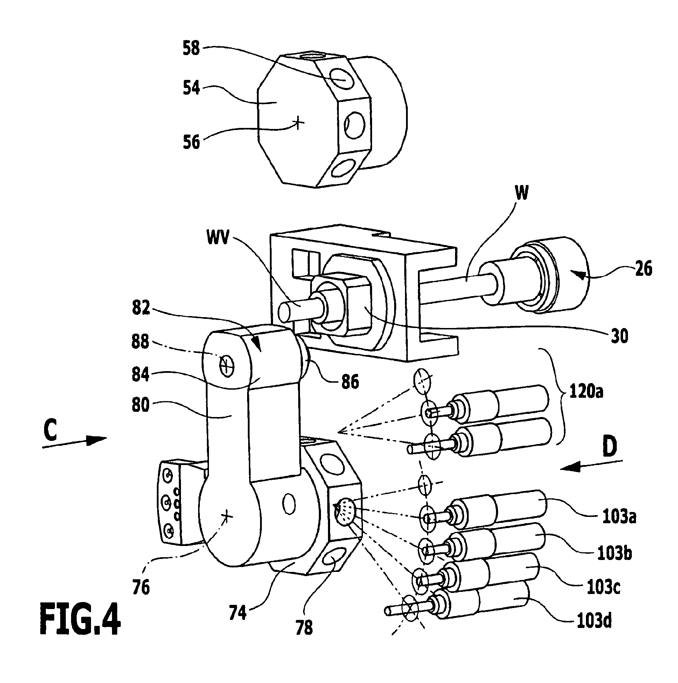

Die Gegenspindel 86 dient dabei dazu, ein in durch die Hauptspindel 26 gehaltenes und die Langdrehführungsbüchse 30 geführtes Werkstück W nach einer Bearbeitung einer Werkstückvorderseite WV (Fig. 4) mit der bearbeiteten Werkstückvorderseite WV aufzunehmen und rückseitig zu bearbeiten.

Hierzu ist an dem Maschinengestell 10 ein dritter Träger 90 vorgesehen, der Aufnahmen 92 für Bearbeitungseinheiten aufweist, die Aufnahmen 92 stationär am dritten Träger 90 vorgesehen sind und der dritte Träger 90 mittels eines Haltearms 94 starr mit dem Maschinengestell 12, beispielsweise mit dem Fußteil 16 desselben verbunden ist.

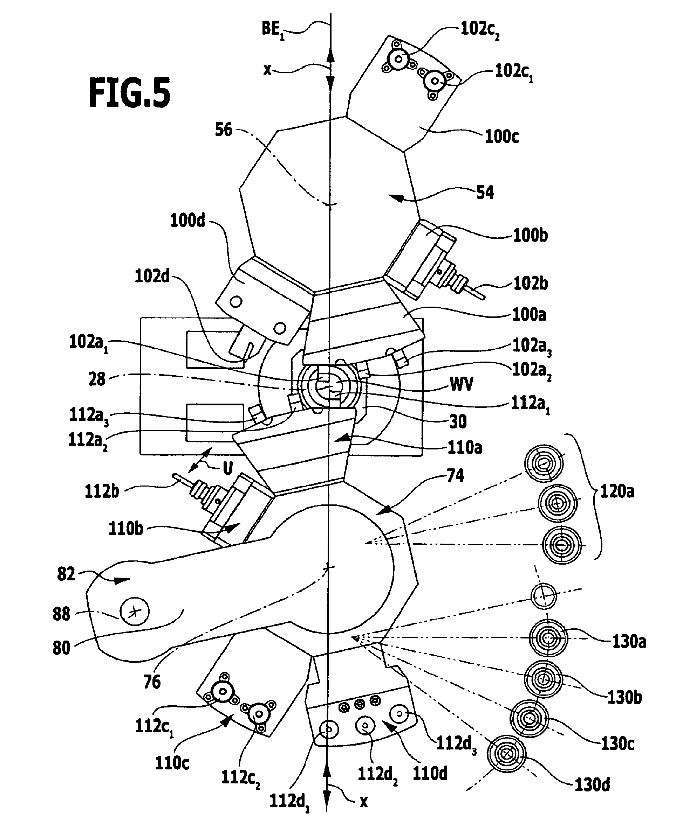

Eine Bearbeitung des Werkstücks W auf der Werkstückvorderseite WV erfolgt, wie beispielsweise in Fig. 5 dargestellt, in die ersten Aufnahmen 58 des ersten Revolverkopfes 54 eingesetzte Bearbeitungseinheiten darstellende erste Werkzeugeinheiten 100a, 100b, 100c und 100d, deren Werkzeuge 102 wechselweise einsetzbar sind.

Beispielsweise steht bei der Darstellung gemäß Fig. 5 das Werkzeug 102a₁ in seiner Bearbeitungsstellung, um die Werkstückvorderseite WV zu bearbeiten.

Hierzu erfolgt, wie in Fig. 5 dargestellt, eine Bewegung des Revolverkopfes 54 in Richtung der ersten X-Achse, welche vorzugsweise in einer ersten Bearbeitungsebene BE₁ liegt, die einerseits durch die Revolverachse 56 und andererseits durch die Hauptspindelachse 28 hindurch verläuft, wie nachfolgend noch im Einzelnen erläutert. Ferner ist durch Drehen des Revolverkopfes 54 die Möglichkeit gegeben, entweder die übrigen Werkzeuge 102a₂ oder 102a₃ der Werkzeugeinheit 100a oder andere Werkzeuge 102 der anderen Werkzeugeinheiten 100 in eine Bearbeitungsstellung zu bringen, in welcher das jeweilige Werkzeug 102 die Werkstückvorderseite WV bearbeiten kann.

Beispielsweise wird bei allen Drehbearbeitungen, also beispielsweise bei den Werkzeugen 102a₁, 102a₂ und 102a₃ sowie 102d, ein Werkzeugvorschub lediglich durch Bewegung des Revolverkopfes 54 in Richtung der ersten X-Achse oder der Z-Achse erfolgen.

Bei Bohrwerkzeugen oder Fräswerkzeugen, wie beispielsweise den Werkzeugen 102b oder 102c₁ oder 102c₂ erfolgt eine Vorschubbewegung vorzugsweise in Richtung der ersten X-Achse und der ersten Y-Achse oder gegebenenfalls auch noch zusätzlich oder ausschließlich der ersten Z-Achse. Auch der zweite Revolverkopf 74 trägt als Bearbeitungseinheiten zweite Werkzeugeinheiten 110, beispielsweise die Werkzeugeinheiten 110a, 110b und 110c sowie die Werkzeugeinheit 110d, die mit Werkzeugen 112 bestückt sind.

Beispielsweise dienen alle Werkzeuge 112 zum Bearbeiten des in der Hauptspindel 26 aufgenommenen Werkstücks W auf der Werkstückvorderseite WV. Wie in Fig. 5 dargestellt, ist beispielsweise das Werkzeug 112a₁ der Werkzeugeinheit 110 an der Werkstückvorderseite WV in Eingriff.

In diese Vorderseitenbearbeitungsstellung erfolgt eine Werkzeugvorschubbewegung für das Werkzeug 112a₁ durch Bewegen des zweiten Revolverkopfes 74 in Richtung der zweiten X- und/oder der zweiten Z-Achse.

Dabei verläuft in der Vorderseitenbearbeitungsstellung die X-Achse parallel zur ersten Bearbeitungsebene BE1 und liegt vorzugsweise bei der Durchführung von Drehbearbeitungen in der Bearbeitungsebene BE1, so dass im Fall des dargestellten Ausführungsbeispiels die Bearbeitungsebene BE1 auch durch die zweite Revolverachse 76 hindurch verläuft.

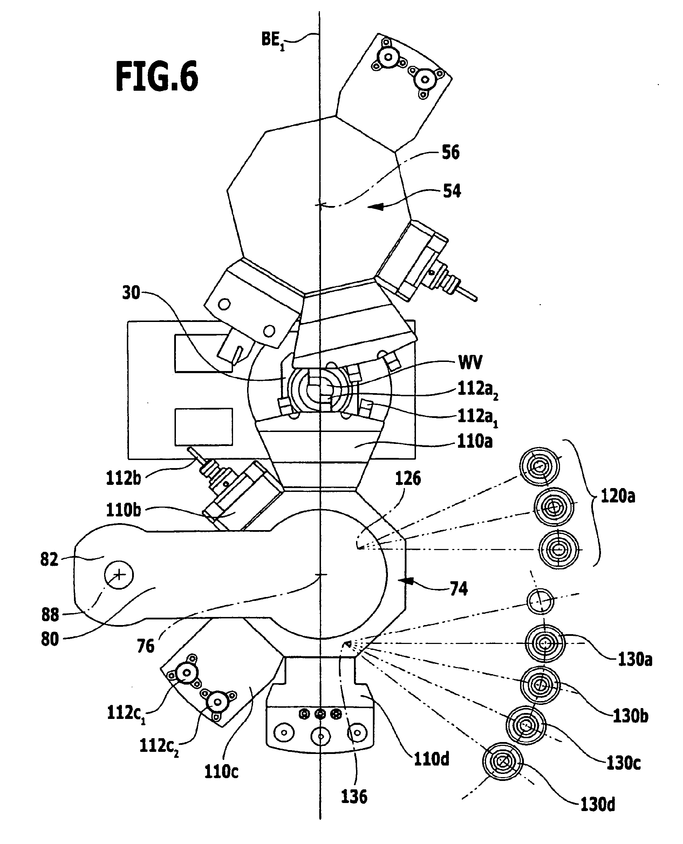

Wie beispielsweise in Fig. 6 dargestellt, kann durch Drehen des zweiten Revolverkopfes 74 um die zweite Revolverachse 76 ein Wechsel des zur Bearbeitung eingesetzten Werkzeugs vom Werkzeug 112a₁ zum Werkzeug 112a₂ erfolgen.

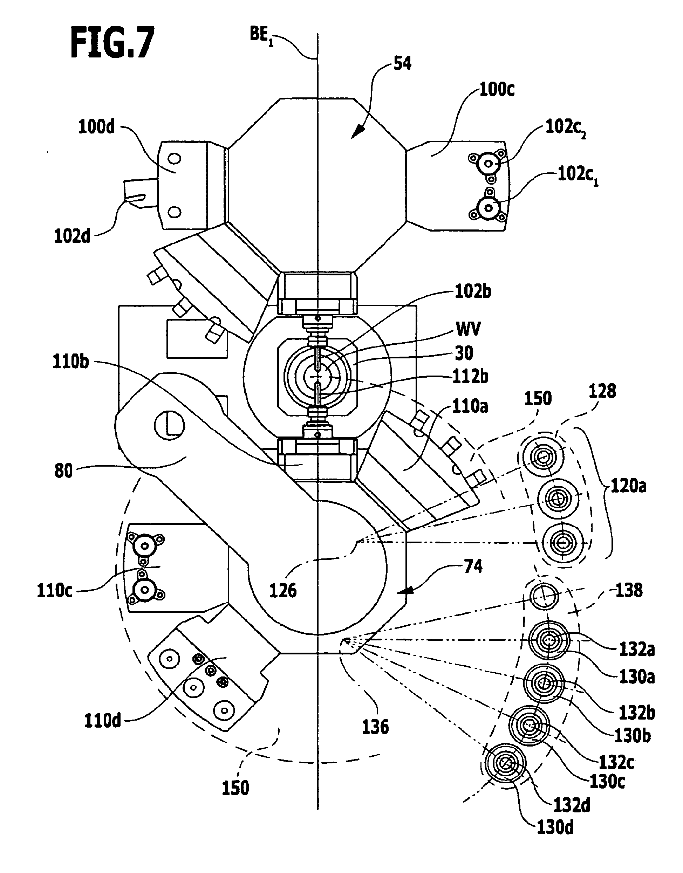

Wie außerdem in Fig. 7 dargestellt, können an der Werkstückvorderseite WV auch Bohrbearbeitungen beispielsweise mit den Werkzeugen 102b und 112b durch geeignete Drehung der Revolverköpfe 54 und 74 durchgeführt werden, wobei die Bohrwerkzeuge 102b und 112b mit ihren Achsen einmal in der ersten Bearbeitungsebene BE1 liegend eingesetzt werden können, jedoch auch parallel oder schräg zu dieser ausgerichtet.

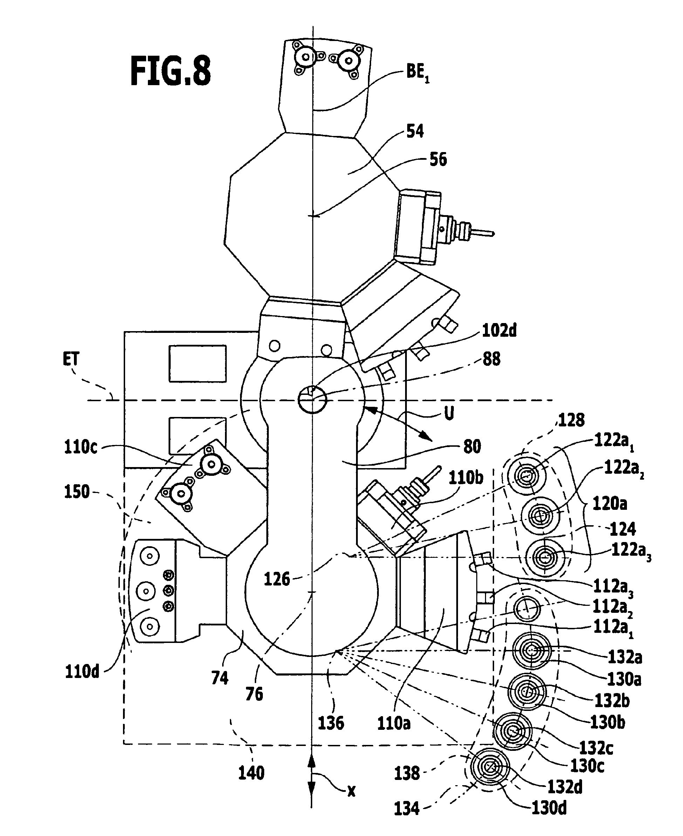

Ist das Werkstück W auf seiner Werkstückvorderseite WV fertig bearbeitet, so erfolgt, wie in Fig. 8 dargestellt, ein Abstechen des Werkstücks WV, welches beispielsweise ein vorderer Bereich einer Werkstückstange ist, mittels des Abstechwerkzeugs 102d, wobei gleichzeitig die Werkstückvorderseite WV durch die an dem Schwenkarm 80 gehaltene und in einer Übernahmestellung stehende Gegenspindel 86 aufgenommen ist, und die Gegenspindel 86 um ihre Gegenspindelachse 88 mit der Hauptspindel 26 synchron mitrotiert.

Hierzu wird der Schwenkarm 80 so gedreht, dass die Gegenspindel 86 in ihrer Übernahmestellung relativ zum in der Hauptspindel 26 gehaltenen Werkstück W steht, wobei in der Übernahmestellung die Gegenspindelachse 88 koaxial zur Hauptspindelachse 28 ausgerichtet ist.

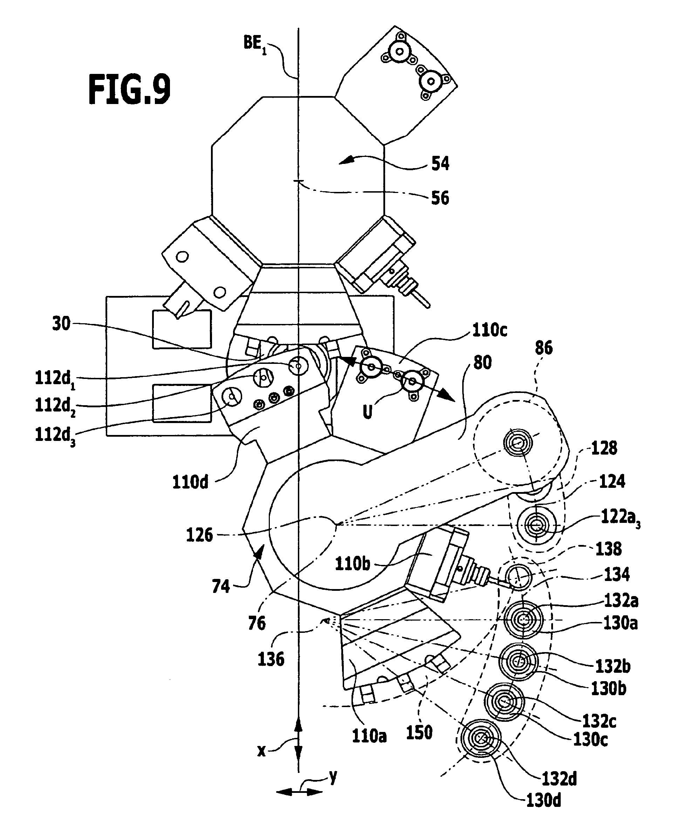

Wie in Fig. 9 dargestellt, ist eine erste Art der Rückseitenbearbeitung des mit der Werkstückvorderseite WV in der Gegenspindel 86 aufgenommenen Werkstücks dadurch möglich, dass der zweite Revolverkopf 76 um die zweite Revolverachse 76 verschwenkt und bereits dadurch die Gegenspindel 86 in einer Querrichtung U quer zur zweiten X-Achse bewegt. Ferner wird der zweite Revolverkopf 76 gleichzeitig in Richtung der X-Achse und der Y-Achse so bewegt, dass die zweite Revolverachse 76 seitlich der ersten Bearbeitungsebene BE₁ liegt und dabei in Richtung der X-Achse und der Y-Achse so in eine Simultanrückseitenbearbeitungsstellung verschoben ist, dass einerseits das Werkzeug 112d₁ der Werkzeugeinheit 100d an dem nächstfolgenden, in der Hauptspindel 26 gehaltenen und durch die Langdrehführungsbüchse 30 geführten Werkstück auf dessen Werkstückvorderseite WV einsetzbar ist und andererseits gleichzeitig das in der Gegenspindel 86 aufgenommene Werkstück mit einer dritten Werkzeugeinheit 120a bearbeitbar ist.

In der dritten Werkzeugeinheit 120a sind die Werkzeuge 122a₁, 122a₂ und 122a₃ längs einer Linie 124 angeordnet, die als Bogensegment um einen ersten Linienmittelpunkt 126, welchen die zweite Revolverachse 76 dann durchsetzt, wenn der zweite Revolverkopf 74 in der in Fig. 9 dargestellten Simultanrückseitenbearbeitungsstellung steht.

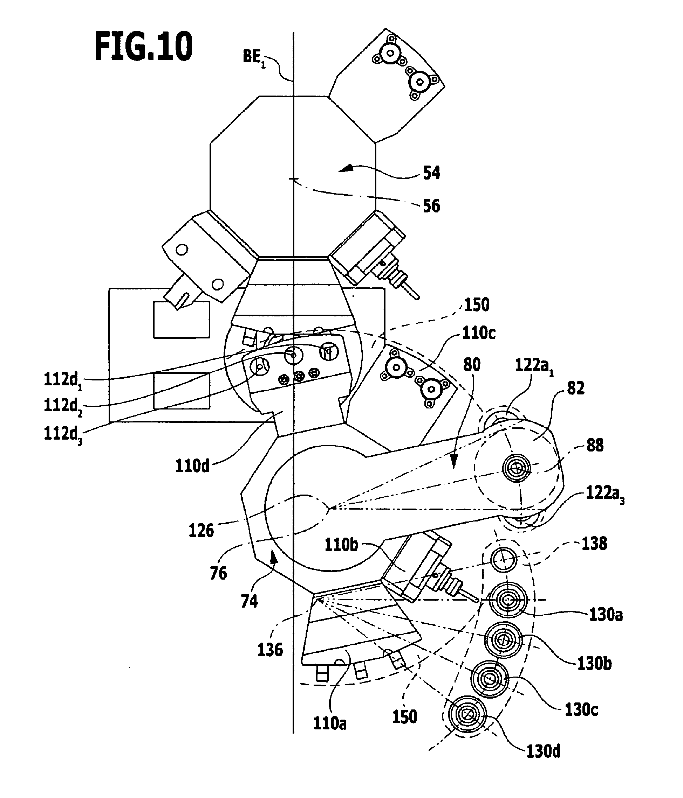

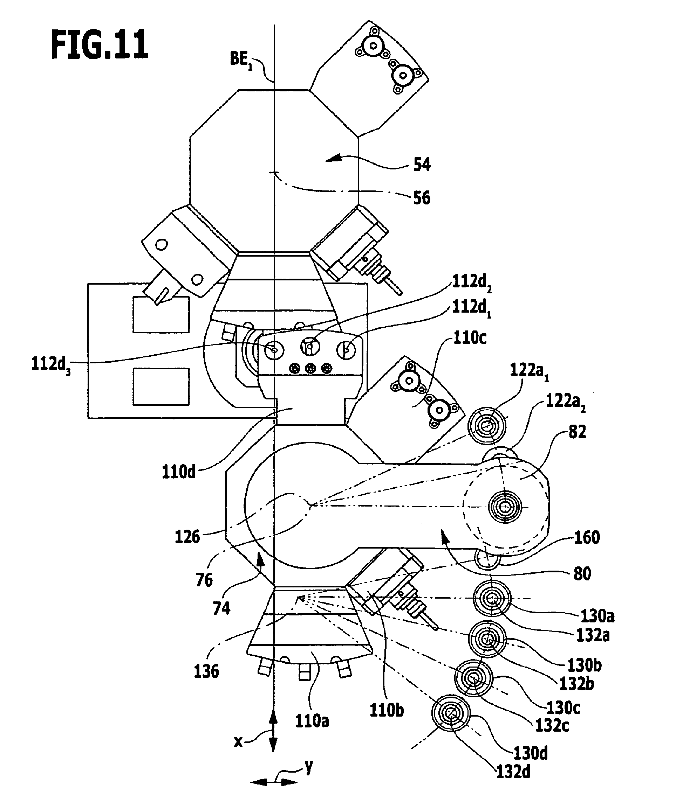

Wie in Fig. 10 und Fig. 11 dargestellt, kann der zweite Revolverkopf 74 mit seiner zweiten Revolverachse 74 in dem ersten Linienmittelpunkt 126 verbleiben, um bei der Bearbeitung von dem Werkzeug 122a₁ zum Werkzeug 122a₂ oder zum Werkzeug 122a₃ zu wechseln, so dass es nicht notwendig ist, den zweiten Revolverkopf 74 zusätzlich in Richtung der X-Achse oder der Y-Achse zu verfahren. Es ist lediglich eine Schwenkbewegung des Schwenkarms 80 erforderlich, um die Gegenspindel 86 von einem der dritten Werkzeuge 122a₁ zum nächsten der dritten Werkzeuge 122a₂ zu bewegen.

In gleicher Weise lassen sich durch dieselben Schwenkbewegungen über dieselben Winkel auch die bei dem in der Hauptspindel 26 aufgenommenen Werkstück einsetzbaren Werkzeuge 112d₁ bis 112d₃ wechseln, wobei bei diesem Wechsel ebenfalls lediglich ein Schwenken des zweiten Revolverkopfes 74 um die zweite Revolverachse 76 erfolgt.

Damit besteht bei der erfindungsgemäßen Werkzeugmaschine in der Simultanrückseitenbearbeitungsstellung die Möglichkeit, das in der Gegenspindel 86 gehaltene Werkstück auf der Rückseite zu bearbeiten, und zwar mit den Werkzeugen 122a₁ bis 122a₃ und gleichzeitig das in der Hauptspindel 26 gehaltene und durch die Langdrehführungsbüchse 30 geführte Werkstück W auf der Werkstückvorderseite WV mittels der Werkzeuge 112d_{1,} 112d₂ und 112d₃ zu bearbeiten.

Um dies zu erreichen, sind bezogen auf den ersten Linienmittelpunkt 126 die Werkzeuge 122a₁ bis 122a₃ der Werkzeugeinheit 120a in denselben Winkelabständen voneinander angeordnet, wie die Werkzeuge 122d₁ bis 122d₃, die alle an derselben Werkzeugeinheit 100d sitzen.

Besonders vorteilhaft ist es hierbei, wenn der zweite Revolverkopf 74 um die Revolverachse 76 nicht nur in diskreten Winkelschritten, sondern stufenlos um beliebige Winkel drehbar ist, um die Bearbeitungseinheiten sowohl in der Vorderseitenbearbeitungsstellung, der Rückseitensynchronbearbeitungsstellung und der Rückseitenbearbeitungsstellung exakt positionieren und/oder Positionierfehler und/oder Geometriefehler ausgleichen zu können.

Um eine Kollision der stationär angeordneten Werkzeuge 122a₁ bis 122a₃ mit den an dem zweiten Revolverkopf 74 angeordneten Werkzeugen 112 und den diese Werkzeuge 112 tragenden Werkzeugeinheiten 110 zu vermeiden, ist die dritte Werkzeugeinheit 120a in einem Raumbereich 128 angeordnet, welcher außerhalb eines Bewegungsraumbereichs 140 liegt, in welchem sich die zweiten Werkzeugeinheiten 110 mit den zweiten Werkzeugen 112 dann bewegen, wenn in der Vorderseitenbearbeitungsstellung mit einem der zweiten Werkzeuge 112 eine Bearbeitung des in der Hauptspindel 26 aufgenommenen und der Langdrehführungsbüchse 30 geführten Werkstücks auf der Werkstückvorderseite WV erfolgt. Der Raumbereich 140 erfasst dabei auch noch die Stellungen der zweiten Werkzeugeinheiten 110 und zweiten Werkzeuge 112, in denen ein Wechsel des jeweiligen zweiten Werkzeugs 112 erfolgt und außerdem auch die Orte der zweiten Werkzeugeinheiten 110 und zweiten Werkzeuge 112, die sich bei der Übernahmestellung der Gegenspindel 86 gemäß Fig. 8 ergeben.

Insbesondere ist dabei der Raumbereich 128, in welchem die dritte Werkzeugeinheit 120a angeordnet ist, von der ersten Bearbeitungsebene BE1 weiter entfernt als der maximale Abstand der zweiten Werkzeuge 112 von der zweiten Revolverachse 76.

Außerdem liegt der Raumbereich 128 auf einer der ersten Revolvereinheit 50 abgewandten Seite einer Trennebene ET, welche durch die Hauptspindelachse 28 und senkrecht zu der X-Achse des zweiten Trägers 60 verläuft.

Zusätzlich zu der dritten Werkzeugeinheit 120a, die eine Rückseitenbearbeitung des in der Gegenspindel 86 aufgenommenen Werkstücks gleichzeitig mit einer Bearbeitung einer Werkstückvorderseite WV eines in der Hauptspindel 26 aufgenommenen und durch die Langdrehführungsbüchse 30 geführten Werkstücks aufgrund der Anordnung der dritten Werkzeugeinheit 120a im Raumbereich 128 erlaubt, sind weitere dritte Werkzeugeinheiten 130a bis 130d vorgesehen, deren Werkzeuge 132a bis 132d längs einer zweiten Linie 134 angeordnet sind, die ein Bogensegment zu einem zweiten Linienmittelpunkt 136 darstellt, der in einem größeren Abstand von der Trennebene ET angeordnet ist, als der erste Linienmittelpunkt 126, allerdings in einem geringeren Abstand von der ersten Bearbeitungsebene EB1.

Durch Verschieben des zweiten Revolverkopfes 74 in eine Rückseitenbearbeitungsstellung derart, dass dessen Revolverachse 76 in dem zweiten Linienmittelpunkt 136 steht, besteht die Möglichkeit, nur durch Verschwenken des zweiten Revolverkopfes 74 die Gegenspindel 86 so zu positionieren, dass das in dieser gehaltene Werkstück durch die weiteren dritten Werkzeuge 132a bis 132d bearbeitet werden kann.

Zur Vermeidung von Kollisionen liegt auch ein Raumbereich 138, in welchem die weiteren dritten Werkzeuge 132a bis 132d angeordnet sind, außerhalb des Bewegungsraumbereichs 140.

Ferner ist der Raumbereich 138 so angeordnet, dass sich bei in der Rückseitenbearbeitungsstellung stehendem Revolverkopf alle zweiten Werkzeugeinheiten 110 und alle zweiten Werkzeuge 112 kollisionsfrei zu der Langdrehführungsbüchse 30 und dem von der Langdrehführungsbüchse 30 geführten und in der Hauptspindel 26 gehaltenen Werkstück bewegen lassen.

Aus diesem Grund ist der Abstand des Raumbereichs 138 von der Trennebene ET größer als der Abstand des Raumbereichs 128 von dieser.

Bei dem ersten Ausführungsbeispiel sind die Raumbereiche 128 und 138 vorzugsweise auf einer Seite der Bearbeitungsebene BE1 angeordnet, welcher der Frontseite 18 des Maschinengestells 10 zugewandt ist, über welche ein einfacher Zugang zu den dritten Werkzeugeinheiten 120 und dem weiteren dritten Werkzeugen 130 möglich ist, um diese zu montieren und zu justieren.

Da sich ferner die Werkzeugeinheiten 130a bis 130d und die Werkzeuge 132a bis 132d über einen Winkelbereich erstrecken, welcher größer ist als ein für eine der zweiten Werkzeugeinheiten 110 vorgesehener Winkelbereich, ist zum Erreichen der Kollisionsfreiheit zwischen den weiteren dritten Werkzeugen 132a bis 132d und den zweiten Werkzeugen 112 sowie den zweiten Werkzeugeinheiten 110 vorgesehen, dass die Gegenspindel 86 das zur Rückseitenbearbeitung vorgesehene Werkstück mit seiner Rückseite außerhalb eines Werkzeugraums 150 hält, welcher sich bei in der Rückseitenbearbeitungsstellung stehendem Revolverkopf 74 um die zweite Revolverachse 76 herum als Ringraum radial im Anschluss an den zweiten Revolverkopf 74 erstreckt und welcher außerdem durch den größten radialen Abstand der zweiten Werkzeugeinheiten 110 oder zweiten Werkzeuge 112 von der zweiten Revolverachse 76 sowie den größten axialen Abstand der zweiten Werkzeugeinheiten 110 und der zweiten Werkzeuge 112 von einer Mittelebene ME der Aufnahmen 78 an dem zweiten Revolverkopf 74 vorgegeben ist.

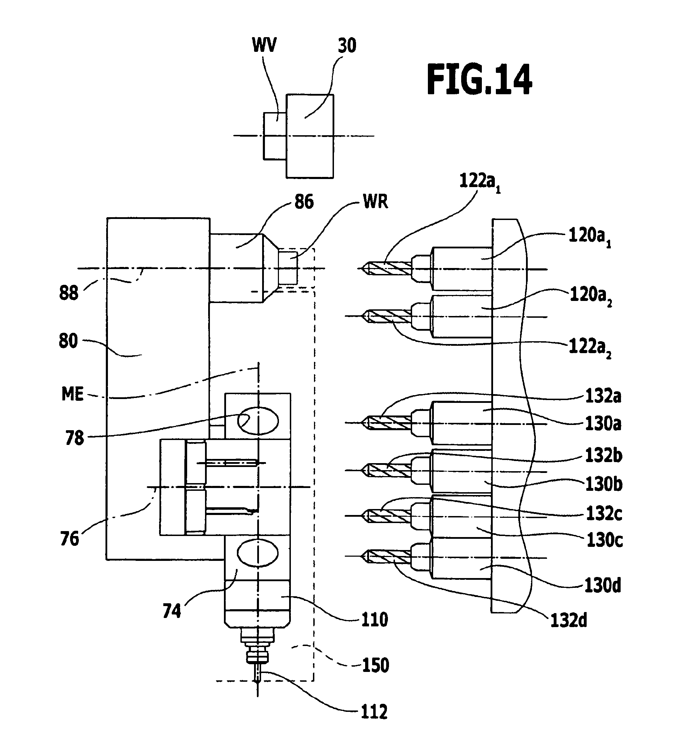

Bei dem ersten Ausführungsbeispiel liegt, wie eine in Fig. 14 dargestellte Seitenansicht zeigt, die zur Rückseitenbearbeitung vorgesehene Werkzeugrückseite WR des in der Gegenspindel 86 gehaltenen Werkstücks radial bezüglich der zweiten Revolverachse 76 außerhalb des Werkzeugraums 150, so dass sich bereits aufgrund dieser Anordnung Kollisionen zwischen den zweiten Werkzeugeinheiten 110 und den zweiten Werkzeugen 112 mit den dritten Werkzeugen 132a bis 132d der dritten Werkzeugeinheit 120 vermeiden lassen.

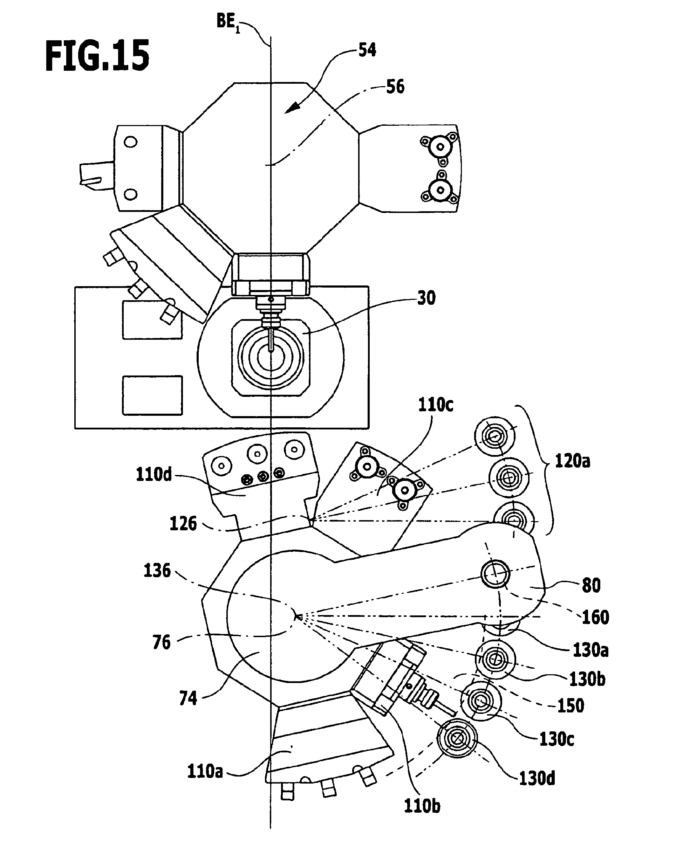

Zur Abfuhr des Werkstücks aus der Gegenspindel 86 ist außerdem noch eine Werkstückabfuhreinrichtung 160 vorgesehen, die zweckmäßigerweise auch längs der zweiten Linie 134 und innerhalb des Raumbereichs 138 angeordnet ist, so dass nach einer Bearbeitung der Rückseite WR des Werkstücks W mit den Werkzeugen 132 durch eine weitere Schwenkbewegung des Revolverkopfs 74 um die Revolverachse 76 die Werkstückabfuhreinrichtung 160 erreichbar ist (Fig. 15), ohne dass eine Bewegung in der zweiten X-Richtung oder der zweiten Y-Richtung erforderlich ist.

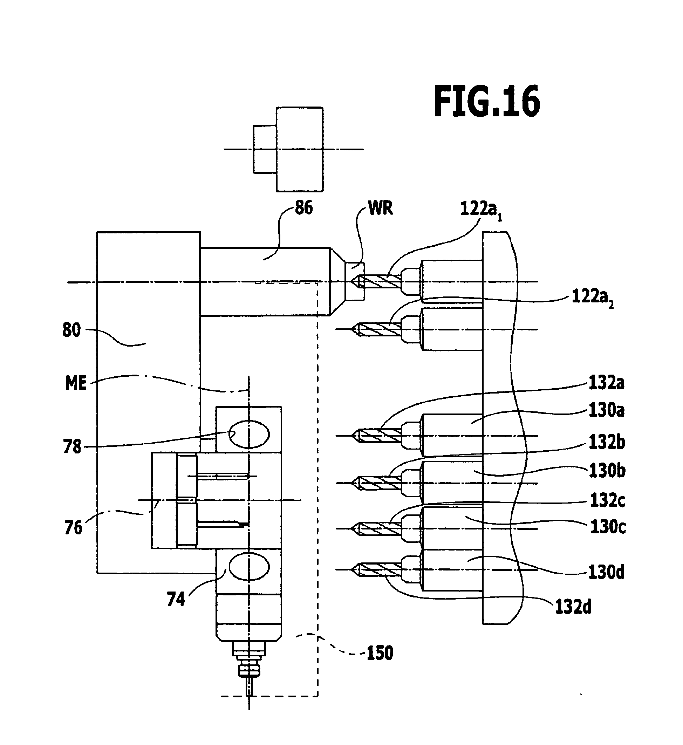

Alternativ dazu ist bei einem zweiten Ausführungsbeispiel, dargestellt in Fig. 16, welches eine Variante des ersten Ausführungsbeispiels darstellt, vorgesehen, dass die zur Bearbeitung vorgesehene Werkstückrückseite WR des in der Gegenspindel 86 aufgenommenen Werkstücks dadurch außerhalb des Werkzeugraums 150 positioniert ist, dass diese in axialer Richtung von der Mittelebene ME einen größeren Abstand aufweist als die Ausdehnung des Werkzeugraums 150 in dieser Richtung, so dass dadurch ebenfalls Kollisionen zwischen den sich im Werkzeugraum 150 erstreckenden zweiten Werkzeugeinheiten 110 und zweiten Werkzeugen 112 mit den dritten Werkzeugen 132a bis 132d nicht auftreten können.

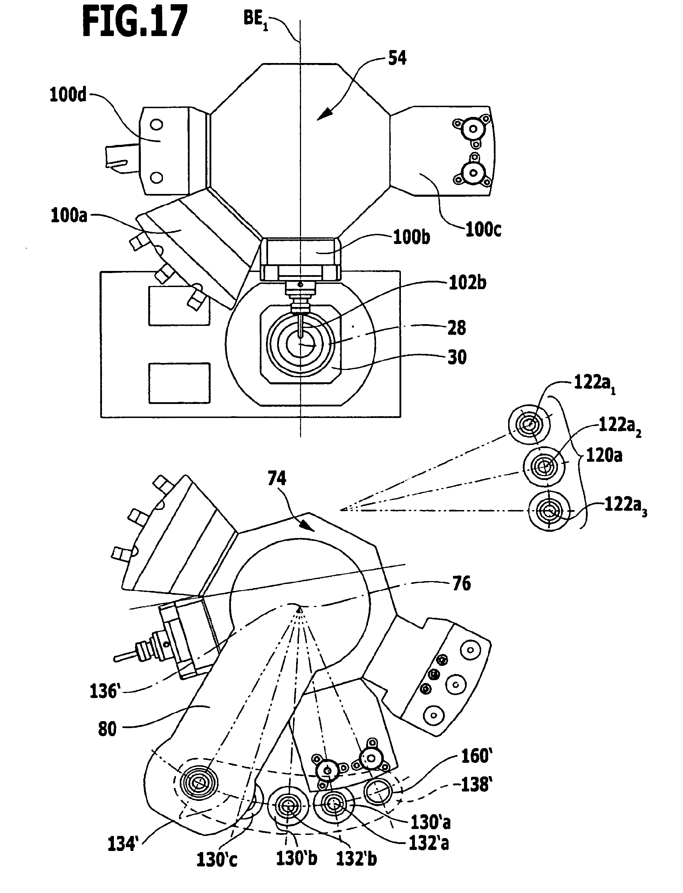

Bei einem dritten Ausführungsbeispiel, dargestellt in Fig. 17, welches eine zweiten Variante des ersten Ausführungsbeispiels ist, ist der Raumbereich 138 auf einer der Hauptspindelachse 28 gegenüberliegenden Seite des zweiten Revolverkopfes 74 angeordnet, so dass in diesem Fall die zweite Revolverachse 76 und auch der zweite Linienmittelpunkt 136' der zweiten Linie 134' so positioniert werden kann, dass diese auf der Bearbeitungsebene BE1 liegen, so dass keine Verschiebung der zweiten Revolverachse 36' quer zur ersten Bearbeitungsebene BE1 in Richtung der Y-Achse erforderlich ist.

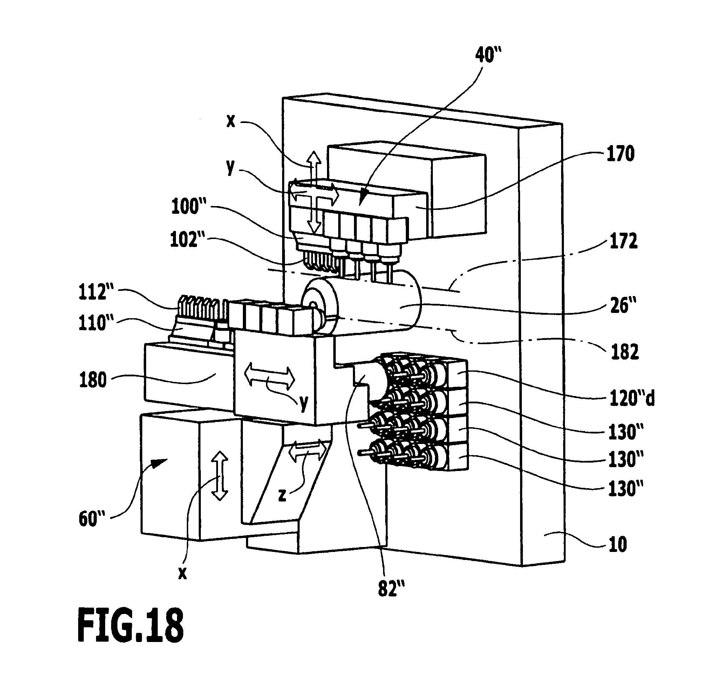

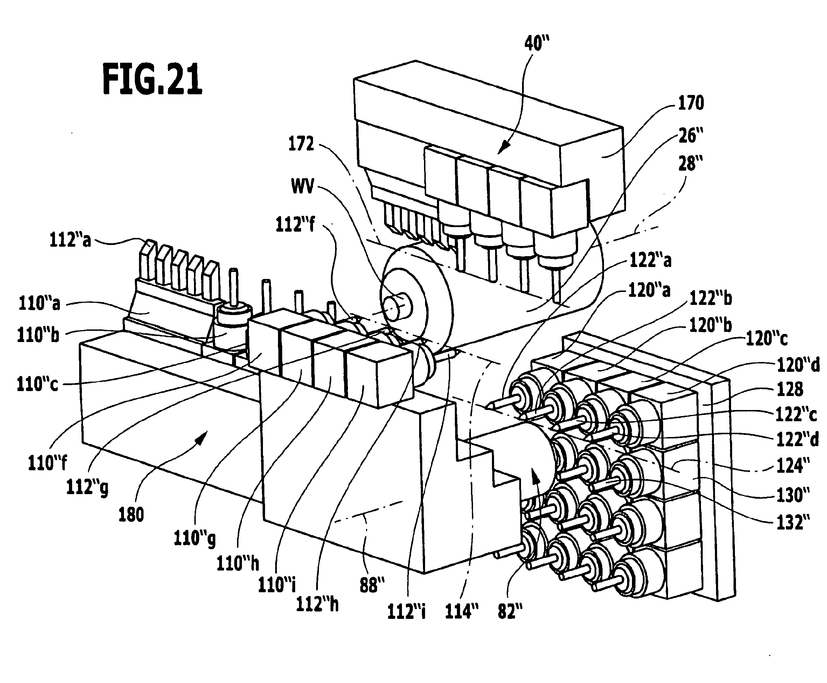

Bei einem vierten Ausführungsbeispiel einer erfindungsgemäßen Werkzeugmaschine, dargestellt in den Fig. 18 bis 21, ist die Hauptspindel 26" in gleicher Weise wie bei den voranstehenden Ausführungsbeispielen in Richtung der Z-Achse bewegbar.

In Abweichung zu den voranstehenden Ausführungsbeispielen ist der erste Träger 40" mit einem Linearwerkzeugträger 170 versehen, welcher zumindest in Richtung der ersten X-Achse als auch der ersten Y-Achse relativ zum Maschinengestell 10 bewegbar ist, wobei an dem Linearwerkzeugträger 170 mehrere erste Werkzeugeinheiten 100" mit mehreren ersten Werkzeugen 102" längs einer Reihenrichtung 162 angeordnet sind, und die Reihenrichtung 172 parallel zur Y-Achse verläuft, so dass durch Verschieben des Linearwerkzeugträgers 170 entlang der Y-Achse ein Wechsel zwischen verschiedenen ersten Werkzeugen 102" möglich ist, um diese einzeln an dem Werkstück W einsetzen zu können.

Desgleichen ist der zweite Träger 60" mit einer zweiten Lineareinheit 180 versehen, welche ebenfalls in Richtung der X-Achse, der Y-Achse und der Z-Achse verschiebbar ist, wobei an der zweiten Lineareinheit 180 ebenfalls zweite Werkzeugeinheiten 110" mit zweiten Werkzeugen 112" längs einer Reihenrichtung 182 angeordnet sind, wobei die Reihenrichtung 182 ebenfalls parallel zur Y-Achse des zweiten Trägers 60" verläuft, so dass in einer Vorderseitenbearbeitungsstellung der Lineareinheit 180 durch Verschieben der Lineareinheit 180 in Richtung der Y-Achse unterschiedliche zweite Werkzeuge 112" um in der Hauptspindel 26" gehaltenen Werkstück W zur Bearbeitung der Werkstückvorderseite WV in Einsatz bringbar sind.

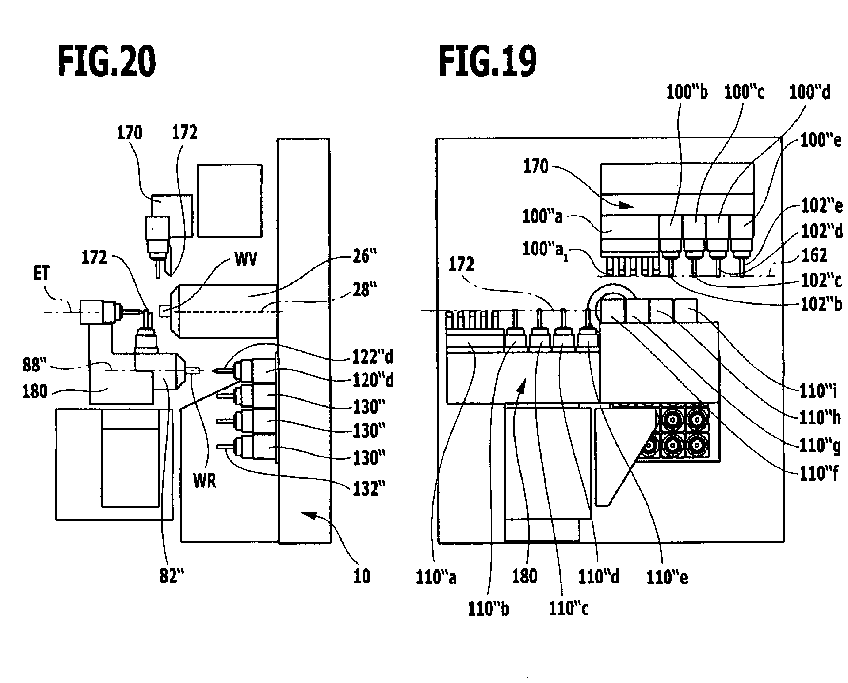

Darüber hinaus ist an der zweiten Lineareinheit 180, wie in Fig. 18 und 19 dargestellt, die Gegenspindeleinheit 82" angeordnet, welche somit in gleicher Weise wie die Lineareinheit 180 bewegbar ist.

Vorzugsweise ist die Gegenspindeleinheit 82" so ausgerichtet, dass eine Gegenspindelachse 88" in gleicher Weise wie bei den voranstehenden Ausführungsbeispielen parallel zur Z-Richtung und auch insbesondere parallel zur Hauptspindelachse 28 verläuft, so dass auch die Gegenspindeleinheit 82" durch Bewegen der Lineareinheit 180 in Richtung der zweiten X-Achse, der zweiten Y-Achse und der zweiten Z-Achse bewegbar ist.

Insbesondere ist dabei die Gegenspindeleinheit 82" auf einer dem ersten Träger 40" abgewandten Seite der Reihenrichtung 182 angeordnet, so dass die Gegenspindelachse 88" im Abstand zur Reihenrichtung 182 verläuft.

An dem Maschinengestell 10 sind ferner dritte Werkzeugeinheiten 120" angeordnet, beispielsweise die Werkzeugeinheiten 120"a, 120"b, 120"c, 120"d, deren Werkzeuge 122"a, 122"b, 122"c und 122"d längs einer Linie 124" angeordnet sind, die parallel zur Y-Achse verläuft.

Die Werkzeuge 122"a bis 122"d der Werkzeugeinheiten 120"a bis 120"d sind dabei in derart in denselben Abständen voneinander angeordnet, wie die Werkzeuge 112"d, 112"e, 112"f und 112"g, und außerdem sind die Werkzeugeinheiten 120"a bis 120"d in einem Raumbereich 128 angeordnet, der so liegt, dass die Linie 124" in demselben Abstand von der Hauptspindelachse 28 verläuft, wie die eine Linie 114", längs welcher die Werkzeuge 112"d bis 112"g angeordnet sind, so dass in der Simultanrückseitenbearbeitungsstellung der Lineareinheit 180 die Möglichkeit besteht, das Werkzeug 112"g dann an dem in der Hauptspindel 26" gehaltenen Werkstück W einzusetzen, wenn das Werkzeug 122"a zur Rückseitenbearbeitung des in der Gegenspindel 86 gehaltenen Werkstücks gleichzeitig einsetzbar ist.

In gleicher Weise lassen sich dann auch die übrigen Werkzeuge 122"b bis 122"d sowie 112"f bis 112"d gleichzeitig einsetzen.

Zusätzlich zu den dritten Werkzeugeinheiten 120"a bis 120"d sind noch weitere dritte Werkzeugeinheiten 130" mit vierten Werkzeugen 132" vorgesehen, welche auf einer dem ersten Träger 40" abgewandten Seite der dritten Werkzeugeinheiten 120"a bis 120"d angeordnet sind und somit zur Bearbeitung des in der Gegenspindel 86" gehaltenen Werkstücks auf der Rückseite desselben einsetzbar sind, wenn die zweite Lineareinheit 180 in einer Rückseitenbearbeitungsstellung steht und dabei so weit in Richtung der zweiten X-Achse von der Hauptspindelachse 28 weg verschoben ist, dass keines der ersten Werkzeuge 112" an der Werkstückvorderseite WV des in der Hauptspindel 26" aufgenommenen Werkstücks W einsetzbar sind, so dass mit den weiteren dritten Werkzeugeinheiten 130" und den entsprechenden Werkzeugen 132" lediglich ausschließlich eine Rückseitenbearbeitung des in der Gegenspindel 88" gehaltenen Werkstücks ausführbar ist.

Im Übrigen funktioniert das zweite Ausführungsbeispiel in gleicher Weise wie das erste Ausführungsbeispiel, so das über die vorstehende Beschreibung zum Aufbau und Funktion des zweiten Ausführungsbeispiels hinausgehend auf das erste Ausführungsbeispiel Bezug genommen werden kann.

## Patentansprüche

1. Werkzeugmaschine umfassend ein Maschinengestell (10), eine am Maschinengestell (10) angeordnete erste Spindel (26) zur Aufnahme eines Werkstücks (W), einen am Maschinengestell (10) angeordneten ersten Träger (40) für erste Bearbeitungseinheiten (100), welcher relativ zum Maschinengestell (10) in Richtung einer ersten X-Achse quer zu einer ersten Spindelachse (28) bewegbar ist, wobei die erste Spindel (26) und der erste Träger (40) in Richtung einer zur ersten Spindelachse (28) parallelen Z-Achse relativ zueinander bewegbar sind, einen am Maschinengestell (10) angeordneten zweiten Träger (60) für zweite Bearbeitungseinheiten (110), welcher relativ zum Maschinengestell (10) zumindest in Richtung einer zweiten X-Achse quer zur ersten Spindelachse (28) bewegbar ist und mit welchem außerdem wechselnde zweite Bearbeitungseinheiten (110) in einer quer zur zweiten X-Achse und quer zur Z-Achse verlaufenden Querrichtung (U, Y) in eine dem Werkstück (W) in der ersten Spindel zugeordnete Funktionsstellung hinein oder aus dieser herausbewegbar sind, sowie ein am Maschinengestell (10) angeordneten weiteren Träger (90) für weitere Bearbeitungseinheiten (120, 130),
**dadurch gekennzeichnet, dass** der zweite Träger (60) eine zweite Spindel (86) als eine der zweiten Bearbeitungseinheiten trägt, dass durch Bewegen des zweiten Trägers (60) die zweite Spindel (86) in Richtung der Z-Achse und der Querrichtung (U, Y) zwischen einer mit der ersten Spindel (26) fluchtenden Werkstückübernahmestellung und mindestens einer Werkstückbearbeitungsstellung bewegbar ist und dass die weiteren Bearbeitungseinheiten (120, 130) in einem Raumbereich (128, 138) angeordnet sind, in welchem mit der in der mindestens einen Werkstückbearbeitungsstellung stehenden zweiten Spindel (86) eine Bearbeitung einer Werkstückrückseite (WR) des in dieser gehaltenen Werkstücks (W) durchführbar ist.

2. Werkzeugmaschine nach Anspruch 1, **dadurch gekennzeichnet, dass** der Raumbereich (128, 138) für die weiteren Bearbeitungseinheiten (120, 130) auf einer dem ersten Träger (40) gegenüberliegenden Seite einer geometrischen Ebene (ET) liegt, die durch die erste Spindelachse (28) hindurch und quer zur zweiten X-Achse verläuft.

3. Werkzeugmaschine nach einem der voranstehenden Ansprüche, **dadurch gekennzeichnet, dass** der Raumbereich (128, 138) auf einer Seite einer durch die erste Spindelachse (28) hindurch sowie parallel zur zweiten X-Achse verlaufenden ersten Bearbeitungsebene (BE1) angeordnet ist und dass insbesondere der Raumbereich (128, 138) auf einer einer Frontseite (18) der Werkzeugmaschine zugewandten Seite der ersten Bearbeitungsebene (BE1) angeordnet ist.

4. Werkzeugmaschine nach einem der voranstehenden Ansprüche, **dadurch gekennzeichnet, dass** der Raumbereich (128, 138) auf einer von der ersten Spindelachse (28) nicht zugewandten Seiten des zweiten Trägers (60) angeordnet ist und dass beispielsweise der Raumbereich (128, 138) auf einer der ersten Spindelachse abgewandten Seite des zweiten Trägers (60) angeordnet ist.

5. Werkzeugmaschine nach einem der voranstehenden Ansprüche, **dadurch gekennzeichnet, dass** die weiteren Bearbeitungseinheiten (120, 130) in einem definierten Muster angeordnet sind und dass insbesondere die weiteren Bearbeitungseinheiten (120, 130) längs mindestens einer Linie (124, 134) angeordnet sind.

6. Werkzeugmaschine nach einem der voranstehenden Ansprüche, **dadurch gekennzeichnet, dass** die weiteren Bearbeitungseinheiten (120, 130) außerhalb eines Bewegungsraumbereichs (140) von an dem zweiten Träger (60) angeordneten als zweite Werkzeugeinheiten (110) ausgebildeten Bearbeitungseinheiten bei in Funktionsstellung stehendem zweiten Träger (60) angeordnet ist.

7. Werkzeugmaschine nach einem der voranstehenden Ansprüche, **dadurch gekennzeichnet, dass** das in der zweiten Spindel (86) aufgenommene und über diese überstehende Werkstück (W) außerhalb eines dem zweiten Träger (60) zugeordneten Werkzeugraums (150) angeordnet ist.

8. Werkzeugmaschine nach Anspruch 7, **dadurch gekennzeichnet, dass** das Werkstück (W) mit seiner Bearbeitungsseite in Richtung quer zur Z-Achse außerhalb des Werkzeugraums (150) angeordnet ist oder dass das Werkstück mit seiner Bearbeitungsseite in Richtung der Z-Achse außerhalb des Werkzeugraums (150) angeordnet ist.

9. Werkzeugmaschine nach einem der voranstehenden Ansprüche, **dadurch gekennzeichnet, dass** die zweite Spindel (86) relativ zu den zweiten Werkzeugeinheiten (110) so angeordnet ist, dass bei Bearbeitung des in der zweiten Spindel (86) aufgenommenen Werkstücks (W) die zweiten Werkzeugeinheiten (110) kollisionsfrei zu den weiteren Werkzeugeinheiten (120, 130) bewegbar sind.

10. Werkzeugmaschine nach einem der voranstehenden Ansprüche, **dadurch gekennzeichnet, dass** der Raumbereich für die weiteren Bearbeitungseinheiten (120, 130) einen Raumbereich (128) umfasst, in welchem nur Bearbeitungseinheiten (120) für die Simultanbearbeitung vorgesehen sind.

11. Werkzeugmaschine nach einem der voranstehenden Ansprüche, **dadurch gekennzeichnet, dass** der Raumbereich für die weiteren Bearbeitungseinheiten (120, 130) einen Raumbereich (138) umfasst, in welchem nur Bearbeitungseinheiten (130) für die Rückseitenbearbeitung vorgesehen sind.

12. Werkzeugmaschine nach einem der voranstehenden Ansprüche, **dadurch gekennzeichnet, dass** der an dem zweiten Träger (60) vorgesehenen zweiten Spindel (86) mindestens eine zur Simultanbearbeitung vorgesehene und am zweiten Träger (60) angeordnete zweite Werkzeugeinheit (110) zugeordnet ist.

13. Werkzeugmaschine nach Anspruch 12, **dadurch gekennzeichnet, dass** die der zweiten Spindel (86) zugeordnete zweite Werkzeugeinheit (110) relativ zur zweiten Spindel (86) im Abstand angeordnet ist.

14. Werkzeugmaschine nach einem der voranstehenden Ansprüche, **dadurch gekennzeichnet, dass** der zweite Träger (60) eine Revolvereinheit (70) umfasst, an deren Revolverkopf (74) die zweite Spindel (86) angeordnet ist.

15. Werkzeugmaschine nach Anspruch 14, **dadurch gekennzeichnet, dass** die zweite Spindel mittels eines Schwenkarms (80) am Revolverkopf (74) gehalten ist.

16. Werkzeugmaschine nach einem der Ansprüche 14 bis 15, **dadurch gekennzeichnet, dass** die zweite Spindelachse (88) in einem radialen Abstand von der Revolverachse (76) angeordnet ist, der größer ist als eine maximale radiale Erstreckung von Werkzeugen der zweiten Werkzeugeinheiten.

17. Werkzeugmaschine nach einem der Ansprüche 1 bis 14, **dadurch gekennzeichnet, dass** die zweite Spindel (86) im Abstand von einer Reihenrichtung (182) angeordnet ist, längs welcher Schneiden der zweiten Werkzeugeinheiten (110") liegen.

## Claims

1. Machine tool comprising a machine frame (10), a first spindle (26) arranged on the machine frame (10) for accommodating a workpiece (W), a first carrier (40) for first machining units (100) arranged on the machine frame (10), said first carrier (40) being movable relative to the machine frame (10) in the direction of a first X axis transverse to a first spindle axis (28), wherein the first spindle (26) and the first carrier (40) are movable relative to one another in the direction of a Z axis parallel to the first spindle axis (28), a second carrier (60) for second machining units (110) arranged on the machine frame (10), said carrier being movable relative to the machine frame (10) at least in the direction of a second X axis transverse to the first spindle axis (28) and, in addition, alternating second machining units (110) being movable with said carrier into or out of a functional position associated with the workpiece (W) in the first spindle in a transverse direction (U, Y) extending transversely to the second X axis and transversely to the Z axis, as well as an additional carrier (90) for additional machining units (120, 130) arranged on the machine frame (10),
**characterized in that** the second carrier (60) bears a second spindle (86) as one of the second machining units, that as a result of movement of the second carrier (60) the second spindle (86) is movable in the direction of the Z axis and the transverse direction (U, Y) between a workpiece takeover position aligned with the first spindle (26) and at least one workpiece machining position and that the additional machining units (120, 130) are arranged in a spatial area (128, 138) where machining of a rear side (WR) of the workpiece (W) held in the second spindle (86) is adapted to be carried out with said second spindle located in the at least one workpiece machining position.

2. Machine tool as defined in claim 1, **characterized in that** the spatial area (128, 138) for the additional machining units (120, 130) is located on a side of a geometric plane (ET) located opposite the first carrier (40), said plane extending through the first spindle axis (28) and transversely to the second X axis.

3. Machine tool as defined in either one of the preceding claims, **characterized in that** the spatial area (128, 138) is arranged on a side of a first plane of machining (BE1) extending through the first spindle axis (28) as well as parallel to the second X axis and that, in particular, the spatial area (128, 138) is arranged on a side of the first plane of machining (BE1) facing a front side (18) of the machine tool.

4. Machine tool as defined in any one of the preceding claims, **characterized in that** the spatial area (128, 138) is arranged on a side of the second carrier (60) not facing the first spindle axis (28) and that, for example, the spatial area (128, 138) is arranged on a side of the second carrier (60) facing away from the first spindle axis.

5. Machine tool as defined in any one of the preceding claims, **characterized in that** the additional machining units (120, 130) are arranged in a defined pattern and that, in particular, the additional machining units (120, 130) are arranged along at least one line (124, 134).

6. Machine tool as defined in any one of the preceding claims, **characterized in that** the additional machining units (120, 130) are arranged outside a spatial area of movement (140) of machining units arranged on the second carrier (60) and designed as second tool units (110) when the second carrier (60) is in a functional position.

7. Machine tool as defined in any one of the preceding claims, **characterized in that** the workpiece (W) accommodated in the second spindle (86) and projecting beyond it is arranged outside a tool space (150) associated with the second carrier (60).

8. Machine tool as defined in claim 7, **characterized in that** the workpiece (W) is arranged outside the tool area (150) with its machining side in a direction transverse to the Z axis or that the workpiece is arranged outside the tool area (150) with its machining side in the direction of the Z axis.

9. Machine tool as defined in any one of the preceding claims, **characterized in that** the second spindle (86) is arranged relative to the second tool units (110) such that during machining of the workpiece (W) accommodated in the second spindle (86) the second tool units (110) are movable in a collision free manner relative to the additional tool units (120, 130).

10. Machine tool as defined in any one of the preceding claims, **characterized in that** the spatial area for the additional machining units (120, 130) comprises a spatial area (128) where only machining units (120) for the simultaneous machining are provided.

11. Machine tool as defined in any one of the preceding claims, **characterized in that** the spatial area for the additional machining units (120, 130) comprises a spatial area (138) where only machining units (130) for the rear side machining are provided.

12. Machine tool as defined in any one of the preceding claims, **characterized in that** at least one second tool unit (110) arranged on the second carrier (60) and provided for the simultaneous machining is associated with the second spindle (86) provided on the second carrier (60).

13. Machine tool as defined in claim 12, **characterized in that** the second tool unit (110) associated with the second spindle (86) is arranged at a distance relative to the second spindle (86).

14. Machine tool as defined in any one of the preceding claims, **characterized in that** the second carrier (60) comprises a turret unit (70), the second spindle (86) being arranged on the turret head (74) of said turret unit.

15. Machine tool as defined in claim 14, **characterized in that** the second spindle is held on the turret head (74) by means of a pivot arm (80).

16. Machine tool as defined in one of claims 14 to 15, **characterized in that** the second spindle axis (88) is arranged at a radial distance from the turret axis (76), said distance being greater than a maximum radial extension of tools of the second tool units.

17. Machine tool as defined in any one of claims 1 to 14, **characterized in that** the second spindle (86) is arranged at a distance from a row direction (182), cutting edges of the second tool units (110") being located along said row direction.

## Revendications

1. Machine-outil comprenant un bâti de machine (10), une première broche (26) disposée sur le bâti de machine (10) pour la réception d'une pièce à usiner (W), un premier support (40) disposé sur le bâti de machine (10) pour des premières unités d'usinage (100), lequel support peut être déplacé par rapport au bâti de machine (10) en direction d'un premier axe X transversalement à un premier axe de broche (28), la première broche (26) et le premier support (40) pouvant être déplacés en direction d'un axe Z parallèle au premier axe de broche (28) l'un par rapport à l'autre, un second support (60) disposé sur le bâti de machine (10) pour des secondes unités d'usinage (110), lequel second support peut être déplacé par rapport au bâti de machine (10) au moins en direction d'un second axe X transversalement au premier axe de broche (28) et avec lequel des secondes unités d'usinage (110) changeantes peuvent être déplacées en outre dans un sens transversal (U, Y) s'étendant transversalement au second axe X et transversalement à l'axe Z dans une position fonctionnelle associée à la pièce à usiner (W) dans la première broche ou hors de celle-ci, ainsi qu'un autre support (90) disposé sur le bâti de machine (10) pour d'autres unités d'usinage (120, 130), **caractérisée en ce que** le second support (60) porte une seconde broche (86) en guise d'une des secondes unités d'usinage, **en ce qu'**en déplaçant le second support (60), la seconde broche (86) peut être déplacée dans la direction de l'axe Z et du sens transversal (U, Y) entre une position de transfert de pièce à usiner s'alignant avec la première broche (26) et au moins une position d'usinage de pièce à usiner et **en ce que** les autres unités d'usinage (120, 130) sont disposées dans une zone spatiale (128, 138), dans laquelle un usinage d'un côté arrière (WR) de la pièce à usiner (W) maintenue dans la seconde broche (86) peut être réalisé, la seconde broche (86) se trouvant dans au moins une position d'usinage de pièce à usiner.

2. Machine-outil selon la revendication 1, **caractérisée en ce que** la zone spatiale (128, 138) pour les autres unités d'usinage (120, 130) se situe sur un côté opposé au premier support (40) d'un plan géométrique (ET) qui s'étend au travers du premier axe de broche (28) et transversalement au second axe X.

3. Machine-outil selon l'une quelconque des revendications précédentes, **caractérisée en ce que** la zone spatiale (128, 138) est disposée sur un côté d'un premier plan d'usinage (BE1) s'étendant au travers du premier axe de broche (28) ainsi que parallèlement au second axe X et **en ce qu'**en particulier la zone spatiale (128, 138) est disposée sur un côté du premier plan d'usinage (BE1) tourné vers un côté frontal (18) de la machine-outil.

4. Machine-outil selon l'une quelconque des revendications précédentes, **caractérisée en ce que** la zone spatiale (128, 138) est disposée sur un des côtés du second support (60) non tournés vers le premier axe de broche (28) et **en ce que** par exemple la zone spatiale (128, 138) est disposée sur un côté du second support (60) éloigné du premier axe de broche.

5. Machine-outil selon l'une quelconque des revendications précédentes, **caractérisée en ce que** les autres unités d'usinage (120, 130) sont disposées dans un modèle défini et **en ce qu'**en particulier les autres unités d'usinage (120, 130) sont disposées le long d'au moins une ligne (124, 134).

6. Machine-outil selon l'une quelconque des revendications précédentes, **caractérisée en ce que** les autres unités d'usinage (120, 130) sont disposées en dehors d'une zone spatiale de déplacement (140) des unités d'usinage réalisées comme secondes unités d'outil (110), disposées sur le second support (60) lorsque le second support (60) se situe en position fonctionnelle.

7. Machine-outil selon l'une quelconque des revendications précédentes, **caractérisée en ce que** la pièce à usiner (W) reçue dans la seconde broche (86) et dépassant de celle-ci est disposée en dehors d'un espace d'outil (150) associé au second support (60).

8. Machine-outil selon la revendication 7, **caractérisée en ce que** le côté d'usinage de la pièce à usiner (W) est disposé, dans la direction transversale à l'axe Z, en dehors de l'espace d'outil (150) ou **en ce que** le côté d'usinage de la pièce à usiner est disposé, dans la direction de l'axe Z, en dehors de l'espace d'outil (150).

9. Machine-outil selon l'une quelconque des revendications précédentes, **caractérisée en ce que** la seconde broche (86) est disposée par rapport aux secondes unités d'outil (110) de sorte que lors de l'usinage de la pièce à usiner (W) reçue dans la seconde broche (86), les secondes unités d'outil (110) puissent être déplacées sans collision vers les autres unités d'outil (120, 130).

10. Machine-outil selon l'une quelconque des revendications précédentes, **caractérisée en ce que** la zone spatiale pour les autres unités d'usinage (120, 130) comporte une zone spatiale (128), dans laquelle seules des unités d'usinage (120) pour l'usinage simultané sont prévues.

11. Machine-outil selon l'une quelconque des revendications précédentes, **caractérisée en ce que** la zone spatiale pour les autres unités d'usinage (120, 130) comporte une zone spatiale (138), dans laquelle seules des unités d'usinage (130) pour l'usinage des côtés arrières sont prévues.

12. Machine-outil selon l'une quelconque des revendications précédentes, **caractérisée en ce qu'**au moins une seconde unité d'outil (110) prévue pour l'usinage simultané et disposée sur le second support (60) est associée à la seconde broche (86) prévue sur le second support (60).

13. Machine-outil selon la revendication 12, **caractérisée en ce que** la seconde unité d'outil (110) associée à la seconde broche (86) est disposée à distance de la seconde broche (86).

14. Machine-outil selon l'une quelconque des revendications précédentes, **caractérisée en ce que** le second support (60) comporte une unité de tourelle (70), sur laquelle tête de tourelle (74) est disposée la seconde broche (86).

15. Machine-outil selon la revendication 14, **caractérisée en ce que** la seconde broche est maintenue à l'aide d'un bras pivotant (80) sur la tête de tourelle (74).

16. Machine-outil selon l'une quelconque des revendications 14 à 15, **caractérisée en ce que** le second axe de broche (88) est disposé à une distance radiale de l'axe de tourelle (76) qui est supérieure à une étendue radiale maximale d'outils des secondes unités d'outil.

17. Machine-outil selon l'une quelconque des revendications 1 à 14, **caractérisée en ce que** la seconde broche (86) est disposée à distance d'un sens de rangée (182), le long duquel se situent des lames des secondes unités d'outil (110").
